# EUROPEAN PATENT SPECIFICATION

(11) **EP 3 783 688 B1**
(45) Date of publication and mention of the grant of the patent: **21.10.2026**
(21) Application number: 19909473.1
(22) Date of filing: 21.06.2019
(51) Int. Cl.: H01M 50/209, H01M 50/249

(54) **BATTERY PACK, VEHICLE, AND ENERGY STORAGE DEVICE**
BATTERIEPACK, FAHRZEUG UND ENERGIESPEICHERVORRICHTUNG
BLOC-BATTERIE, VÉHICULE ET DISPOSITIF DE STOCKAGE D'ÉNERGIE

(30) Priority: 09.01.2019 CN 201910021244; 09.01.2019 CN 201910020967; 09.01.2019 CN 201910021246; 09.01.2019 CN 201910021248; 09.01.2019 CN 201910021247; 09.01.2019 CN 201910020925
(43) Date of publication of application: 24.02.2021
(60) Divisional application: 23220826.4 / 4 329 067; 24159357.3 / 4 350 864; 26201496.2
(73) Proprietor: BYD Company Limited, Guangdong 518118 (CN)
(72) Inventor: HE, Long, Shenzhen, Guangdong 518118 (CN); SUN, Huajun, Shenzhen, Guangdong 518118 (CN); JIANG, Wenfeng, Shenzhen, Guangdong 518118 (CN); LU, Zhipei, Shenzhen, Guangdong 518118 (CN); ZHENG, Weixin, Shenzhen, Guangdong 518118 (CN); TANG, Jianglong, Shenzhen, Guangdong 518118 (CN); ZHU, Yan, Shenzhen, Guangdong 518118 (CN); WANG, Xinyue, Shenzhen, Guangdong 518118 (CN); HE, Kefeng, Shenzhen, Guangdong 518118 (CN)
(74) Representative: Mathys & Squire
(86) International application number: PCT/CN2019/092391
(87) International publication number: WO 2020/143175

(56) References cited:
- EP-A1- 3 386 001
- CN-A- 102 893 426
- CN-A- 102 893 426
- CN-A- 104 576 999
- CN-A- 106 450 089
- CN-A- 107 394 279
- KR-A- 20160 076 156
- US-A1- 2012 028 105
- US-A1- 2016 167 544
- US-B2- 9 868 361

## Description

### FIELD

This application relates to the field of vehicle manufacturing technologies, and specifically to a battery pack, and a vehicle including the battery pack.

### BACKGROUND

Battery packs applied to electric vehicles in the related art mainly include a battery pack housing and a plurality of battery modules mounted in the battery pack housing. Each of the battery modules is formed by a plurality of cells assembled together.

Users' requirements on the battery life of electric vehicles are becoming higher. However, in the case of limited space at the bottom of the vehicle body, power battery packs in the prior art have the problem of low space utilization, and the energy density of such power battery packs cannot meet the requirements, and it gradually becomes an important factor hindering the development of electric vehicles. Examples of previously known battery packs comprising cells are derivable from CN 102 893 426 A, US 2016/167544 A1, and US 2012/028105 A1.

### SUMMARY

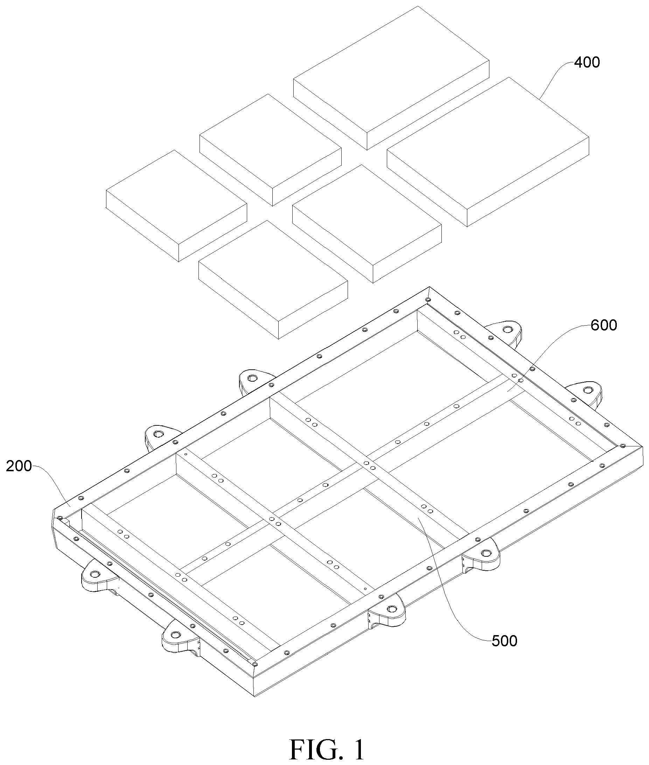

In the related art, as shown in FIG. 1, a battery pack includes a battery pack housing, a plurality of transverse beams 500 and a plurality of longitudinal beams 600, a plurality of transverse beams 500 and a plurality of longitudinal beams 600 divide the battery pack housing into a plurality of mounting regions for battery modules 400. The battery modules 400 are fixed on the transverse beams 500 or the longitudinal beams 600 by screws or other means. Each of the battery modules 400 includes a plurality of cells arranged in sequence. A plurality of cells are arranged to form a cell array. At least one of end plates and side plates are disposed outside the cell array. Usually, both end plates and side plates are disposed. The end plates and the side plates are fixed to define a space for accommodating the cell array. In addition, the end plates and the side plates are connected by screws, by welding, or by other connecting members such as a pull rod, so as to fix the cell array.

Because the battery modules 400 are fixed on the transverse beams 500 and the longitudinal beams 600 by screws, space is wasted, and the use of screws or other connecting members increases the weight, and the energy density is reduced. In addition, because the battery module 400 are designed with the end plates and the side plates which all have a certain thickness and height, space inside the battery pack is wasted, leading to low utilization of the volume of the battery pack. Generally, for the battery pack in the prior art, the ratio of the sum of the volumes of cells in the battery pack to the volume of the battery pack is about 50%, or even lower than 40%.

For the battery pack provided in the embodiment of the prior art, the end plates and the side plates of the battery module 400 and the connection and mounting manners inside the battery pack reduce the utilization of the space inside the battery pack. As a result, in the battery pack, the ratio of the sum of the volumes of cells to the volume of the battery pack is too low, and the energy density of the battery pack cannot meet the requirements, and it gradually becomes an important factor hindering the development of electric vehicles. In addition, a complicated assembly process is required, and complex assembly procedures need to be performed. To be specific, first, cells need to be assembled to form a battery module, and then the battery module needs to be mounted in the battery pack housing, leading to increased labor and material costs. In addition, multiple assembly procedures required in the assembly process of the battery pack lead to an increase in defect rate and an increase in the possibility of loosening and unstable mounting of the battery pack, adversely affecting the quality of the battery pack and reducing the stability and reliability of the battery pack.

The present invention aims to solve at least one of the technical problems in the related art. In view of this, an objective of the present disclosure is to provide a battery pack, which has the advantages of high space utilization, high energy density, long battery life, and low costs.

To achieve the above objective, this application provides a battery pack and a vehicle according to the independent claims
According to the above technical solutions, by limiting the arrangement of cells in the battery pack and the cell dimension, more cells can be disposed in the battery pack; and because the cell is connected to the support member through the supporting region and is supported on the support member, the use of transverse beams or longitudinal beams in the battery pack can be reduced, or even the use of transverse beams and/or longitudinal beams in the battery pack can be avoided, so that the space occupied by transverse beams and/or longitudinal beams in the battery pack can be reduced, thereby improving the utilization of the space inside the battery pack, and allowing as many cells as possible to be disposed in the battery pack, to make the battery pack safer and more reliable. In this way, the capacity, the voltage, and the battery life of the entire battery pack can be improved. For example, in an electric vehicle, such a design can improve the space utilization from about 40% to 60% or even higher, for example, 80%.

In addition, because no transverse beam and/or longitudinal beam needs to be disposed in the battery pack, one one hand, the fabrication process of the battery pack is simplified, the assembly complexity of the cell is reduced, and the production costs are reduced; on the other hand, the weight of the entire battery pack is reduced, thereby achieving a lightweight battery pack. Particularly, when the battery pack is mounted on an electric vehicle, the battery life of the electric vehicle can also be improved, and the weight of the electric vehicle can be reduced.

Moreover, compared with the cell in the prior art, in the present disclosure, the cell has a hard shell and a long cell dimension, so that the cell itself can serve as a transverse beam or longitudinal beam to enhance the structural strength of the battery pack. In other words, no reinforcing structure for enhancing the structural strength needs to be disposed in the battery pack, and the cell can be supported by the support member, that is, the cell itself can be directly used to replace the reinforcing structure to ensure the structural strength of the battery pack, thereby ensuring that the battery pack does not easily deform under an external force.

The vehicle, and the above-mentioned battery pack have the same advantages over the related art, and the details will not be repeated herein.

Other aspects and advantages of this application will be given in the following description, some of which will become apparent from the following description or may be learned from practices of this application.

### BRIEF DESCRIPTION OF THE DRAWINGS

The foregoing and/or additional aspects and advantages of this application will become apparent and comprehensible in the description made with reference to the following accompanying drawings, wherein:
FIG. 1 is a schematic exploded view of a battery pack provided in the related art;
FIG. 2 is a schematic three-dimensional structural diagram of a battery pack according to an implementation of this application;
FIG. 3 is a schematic three-dimensional structural diagram of a cell according to an implementation of this application;
FIG. 4 is a schematic diagram showing an arrangement of a plurality of cells in a battery pack according to an implementation of this application;
FIG. 5 is a schematic three-dimensional structural diagram of a battery pack according to an implementation of this application;
FIG. 6 is a schematic three-dimensional structural diagram of a battery pack according to another implementation of this application;
FIG. 7 is a schematic three-dimensional structural diagram of a battery pack according to still another implementation of this application;
FIG. 8 is an enlarged view of part A in FIG. 7;
FIG. 9 is a three-dimensional cross-sectional view of a battery pack according to an implementation of this application;
FIG. 10 is an enlarged view of part B in FIG. 9;
FIG. 11 is a schematic three-dimensional structural diagram of a battery pack according to another implementation of this application, where first and second side beams are not shown;
FIG. 12 is an exploded view of a battery pack according to an implementation of this application;
FIG. 13 is a schematic three-dimensional structural diagram of a first side plate or a second side plate according to an implementation of this application;
FIG. 14 is a schematic three-dimensional structural diagram of a first end plate or a second end plate according to an implementation of this application;
FIG. 15 is a schematic three-dimensional structural diagram of a battery pack according to an implementation of this application, where there are a plurality of battery modules;
FIG. 16 is a schematic three-dimensional structural diagram of a battery pack (cavity) formed on an electric vehicle according to an implementation of this application;
FIG. 17 is a cross-sectional view of a cavity according to an implementation of this application;
FIG. 18 is a schematic three-dimensional diagram of a tray fixed on an electric vehicle according to an implementation of this application;
FIG. 19 is a schematic exploded view of a battery pack (tray) formed on an electric vehicle according to an implementation of this application;
FIG. 20 is a three-dimensional diagram of a battery pack according to an implementation of this application;
FIG. 21 is a three-dimensional diagram of a battery pack according to another implementation of this application;
FIG. 22 is a three-dimensional diagram of a battery pack according to still another implementation of this application;
FIG. 23 is a three-dimensional diagram of a battery pack according to yet another implementation of this application;
FIG. 24 is a three-dimensional diagram of a battery pack according to yet another implementation of this application;
FIG. 25 is a three-dimensional diagram of a bottom beam according to an implementation of this application;
FIG. 26 is a schematic structural diagram of a vehicle according to an implementation of this application;
FIG. 27 is a schematic structural diagram of an energy storage device not forming part of the invention; and
FIG. 28 is a diagram showing the principle of measuring a first dimension and a second dimension according to this application.

**List of reference numerals:**

| | | | | | |
|---|---|---|---|---|---|
| 1 | vehicle | 2 | energy storage device | | |
| 3 | cell array | 4 | support member | | |
| 100 | cell | | | 101 | first electrode terminal |
| 102 | second electrode terminal | | | 103 | explosion-proof valve |
| 200 | battery pack | | | 201 | first side beam |
| 202 | second side beam | | | 203 | third side beam |
| 204 | fourth side beam | | | 205 | first elastic apparatus |
| 206 | second elastic apparatus | | | 207 | first end plate |
| 208 | second end plate | | | 209 | first side plate |
| 210 | second side plate | | | 211 | second panel |
| 212 | first panel | | | 213 | first support plate |
| 214 | second support plate | | | 215 | first connecting surface |
| 216 | second connecting surface | | | 217 | thermal insulation layer |
| 218 | heat-conducting plate | | | 219 | heat exchange plate |
| 221 | gas inlet | | | 222 | exhaust passage |
| 235 | fourth connecting surface | | | 236 | third connecting surface |
| 233 | second connecting plate | | | 234 | side plate body |
| 232 | first connecting plate | | | 231 | end plate body |
| 700 | first partition plate | | | 800 | second partition plate |
| 300 | cavity | | | 301 | first side wall |
| 302 | second side wall | | | 305 | bottom of cavity |
| 400 | battery module | | | 500 | transverse beam |
| 501 | first beam | | | 502 | second beam |
| 600 | longitudinal beam | | | | |
| L | dimension of the cell along the Y direction | | | | |
| D | dimension of the cell along the X direction | | | | |
| H | dimension of the cell along the Z direction | | | | |
| L1 | distance between the first end and the second end of the cell | | | | |
| L2 | distance between inner surfaces side beam/distance between the first side wall and the second of the side first side beam and the secondwall along the first direction | | | | |
| L3 | width of the battery pack in the Y direction | | | | |

### DETAILED DESCRIPTION

The following describes embodiments of this application in detail. Examples of the embodiments are shown in the accompanying drawings, and same or similar reference numerals throughout the accompanying drawings indicate same or similar components or components having same or similar functions. The following embodiments described with reference to the accompanying drawings are exemplary, are only used for explaining this application, and shall not be understood as limiting this application.

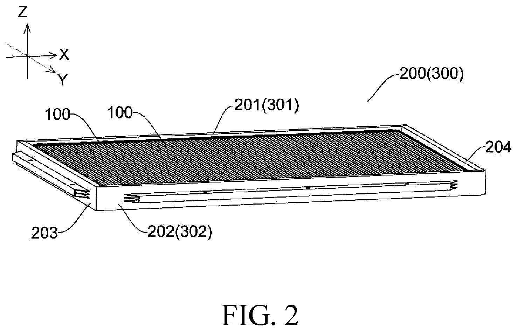

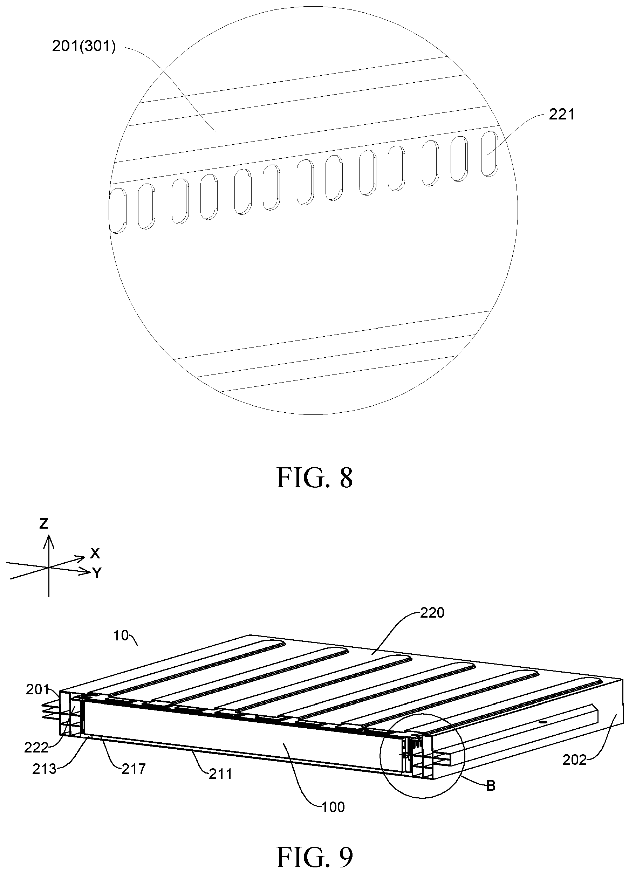

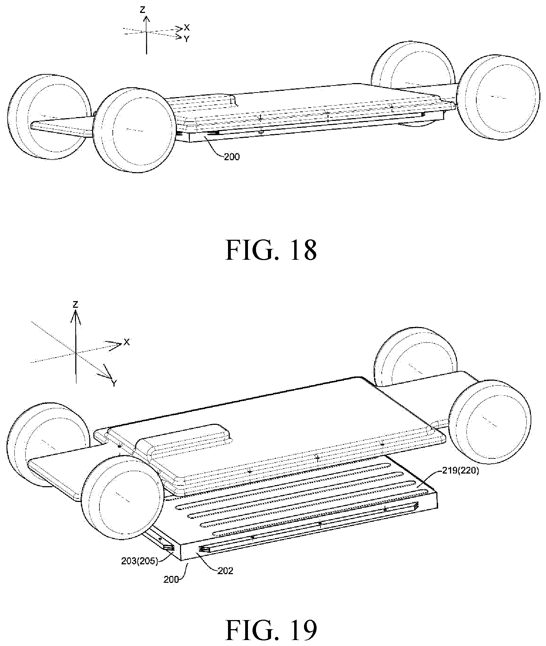

As shown in FIG. 2 to FIG. 25, according to an aspect of this application, a battery pack 200 is provided, including a cell array 3 and a support member 4.

The cell array 3 includes a plurality of cells 100, the cell 100 has a first dimension, and the first dimension is a maximum spacing between two imaginary parallel planes sandwiching the cell 100. At least one of the cells 100 meets: 600 mm≤first dimension≤2500 mm.

It should be noted that the two imaginary parallel planes sandwiching the cell 100 are introduced for the ease of understanding the first dimension, and do not physically exist in the solutions of this application. For example, the cell 100 has a regular or irregular external contour. To determine the first dimension, multiple sets of planes may be imagined. Each set of planes includes two parallel planes spaced apart from each other. The two parallel planes in each set together can imaginarily sandwich two opposite sides of the cell 100. In this case, a distance exists between the two parallel planes in each set, and the first dimension is a maximum value of such distances.

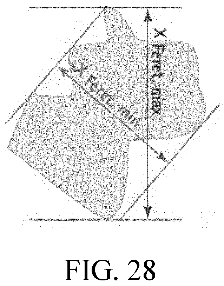

As shown in FIG. 28, the first dimension may be defined with reference to Feret diameter. The Feret diameter is a measure of an object dimension along a specified direction. In general, the measurement method is defined as the distance between the two parallel planes restricting the object perpendicular to the specified direction.

The cell 100 may be of various shapes, for example, may be of a regular geometry or of an irregular geometry. For example, the cell may be square, round, polygonal, triangular, or of any other shape. For example, the cell is a special-shaped cell. It may be understood that the shape of the cell is not limited in this application.

When the cell 100 is a special-shaped cell, the first dimension may be construed as follows: there are multiple pairs of parallel planes tangent to the contour edge of the cell 100, and when a spacing between one pair of parallel planes is greater than spacings between the other pairs of parallel planes, the largest spacing may be defined as the first dimension.

The cell 100 includes a casing and a core located inside the casing. A supporting region is formed on the casing, and the cell 100 is connected to the support member through the supporting region and is supported on the support member.

Compared with the prior art, the battery pack 200 of this application at least has the following improvements:
1) The costs of the battery pack are significantly reduced. Because the cell itself provides a supporting function, reinforcing ribs used in the battery tray can be reduced or omitted, making the fabrication process of the battery pack simpler, and reducing the manufacturing costs. In addition, according to this application, the cell dimension can fit the dimension of the battery pack, and the cells can be directly disposed side by side in the battery pack, different from the prior art where a plurality of cells need to be disposed side by side in a module frame formed by two end plates and two side plates and then the battery modules are assembled to form a battery pack. The cell dimension in this application is long enough, and a plurality of cells can be directly disposed side by side in the battery pack, so that the use of end plates and side plates for assembling battery modules and a large number of fasteners such as screws for fixedly mounting the battery modules is avoided or reduced, making the assembly process of cells simpler, and significantly reducing manufacturing costs in labor and materials. Low-cost battery packs are conducive to the popularization of new energy vehicles.
2) The utilization of the volume of the battery pack is significantly improved, and therefore the volume energy density of the battery pack is increased. As described above, with the supporting function provided by the cell itself, the use of auxiliary support members and fixing members can be reduced, so that the battery pack with the same volume can accommodate more cells, thereby improving the volume utilization and energy density of the battery pack. Because the space reserved in the vehicle for mounting the battery pack is limited, the battery pack of this application can effectively prolong the battery life of the vehicle.
3) The stability and reliability of the battery pack are increased. A more complex battery pack assembly process indicates a higher defect rate, and indicates an increase in the possibility of loosening and unstable mounting of the battery pack, adversely affecting the quality of the battery pack and reducing the stability and reliability of the battery pack. In this application, cells are assembled to form the battery pack, and because the assembly process becomes simpler, the stability and reliability of the battery pack are improved, and accordingly the defect rate of the battery pack is lowered.

Based on the significant technical effect brought by long cells, to enable the cell to support itself, the support strength of the housing may be increased by making improvements in terms of the forming process and the structural design, and the length-width ratio of the housing is controlled in a predetermined range. In addition, the internal resistance of the cell may be reduced by means such as optimizing the current collection path. Moreover, the liquid injection process may also be improved to solve the problem of long liquid injection time caused by long cell dimension.

The casing may include a casing body and a cover plate sealing the casing body. The casing body is made of aluminum or steel.

The casing body may be a polyhedron having an opening. The cover plate is correspondingly configured to close the opening. In a specific implementation, the number of openings may be one or more, and correspondingly, the number of cover plates may also be one or more.

It should be noted that the supporting region may be a partial region of an outer surface of the casing body or the cover plate, or may be any combination of an outer surface of the casing body, an outer surface of the cover plate, a partial region of an outer surface of the casing body, and a partial region of an outer surface of the cover plate, as long as the supporting region can be connected to the support member 4.

In practice, the supporting region may be disposed at two ends of the cell 100 along the first dimension, so that the the cell 100 may be supported by the support member 4 along the first dimension.

It is found that the first dimension of the cell 100 may be designed to be 600 mm-2500 mm. Because the cell 100 is long enough, the cell 100 can be directly supported by the support member 4. By forming a plurality of cells 100 into a module, the cells 100 themselves can provide a supporting function, and replace the reinforcing structure to ensure the structural strength of the battery pack 200. In this way, the use of transverse beams 500 and/or longitudinal beams 600 in the battery pack 200 can be reduced, or even the use of transverse beams 500 and/or longitudinal beams 600 in the battery pack 200 can be avoided, so that the space occupied by transverse beams 500 and/or longitudinal beams 600 in the battery pack 200 can be reduced, thereby improving the utilization of the space inside the battery pack 200, and allowing as many cells 100 as possible to be disposed in the battery pack 200. In this way, the capacity, the voltage, and the battery life of the entire battery pack can be improved. For example, in an electric vehicle, such a design can improve the space utilization from about 40% to 60% or even higher, for example, 80%. It is found through multiple experiments that if the cell 100 is designed as a pouch cell, that is, the housing of the cell is an aluminum-plastic composite film and the aluminum-plastic composite film is used to support the cell, the aluminum-plastic composite film of the cell may be worn out, and the pouch cell in the battery pack is prone to displacement, which accelerates the wear of the cell. Along with the wear of the aluminum-plastic composite film, the cell 100 fails, resulting in a short battery life of the battery pack. In addition, the heat dissipation performance of the pouch cell is poor, and after the pouch cells are designed into the dimension described in this application and arranged in the battery pack, the heat dissipation performance of the entire pouch cell is poor. Therefore, in this application, the cell 100 includes a casing, a cover plate, and a core located inside a space formed by the casing and the cover plate. In other words, the cell is a hard-case cell. When the first dimension of the cell is 600 mm-2500 mm, a supporting region is formed on the casing and/or the cover plate, and the support member 4 is connected to the supporting region to support the cell. Herein, that the support member 4 is connected to the supporting region may be that the support member 4 is in direct contact with the supporting region, or may be that the support member 4 is in indirect contact or connection with the supporting region through another component, which may be set depending on usage scenarios and is not limited in this application.

In addition, because no transverse beam or longitudinal beam needs to be disposed in the battery pack 200, one one hand, the fabrication process of the battery pack 200 is simplified, the assembly complexity of the cell 100 is reduced, and the production costs are reduced; on the other hand, the weight of the entire battery pack 200 is reduced, thereby achieving a lightweight battery pack. Particularly, when the battery pack is mounted on an electric vehicle, the battery life of the electric vehicle can also be improved, and the weight of the electric vehicle can be reduced.

In some embodiments of the present disclosure, the first dimension meets 600 mm≤first dimension≤1500 mm. In some embodiments of the present disclosure, the first dimension meets 600 mm≤first dimension≤1000 mm. The cell 100 having such a length is long enough to be supported by the support member 4, and the cell 100 having such a length is not too long. When used in the battery pack 200, the rigidity of the cell 100 is large enough.

In this application, the specific form of the battery pack is not particularly limited. as long as the battery pack includes the support member 4, the cell array 3 is located on the support member 4, and the cells 100 are supported on the support member 4. The specific structure of the support member 4 is not limited in this application, as long as the cells 100 can be supported on the support member 4. The specific structure of the support member 4 will be described below. The cells 100 are supported on the support member 4. The cells 100 may be directly supported on the support member 4, that is, respectively disposed on the support member 4, or fixed on the support member 4. The specific fixing manner will be described in detail below. The specific supporting and fixing manners are not limited in this application.

The support member 4 is used for supporting the cell array 3. The support member 4 is usually of a rigid structure. The support member 4 may be an independently fabricated tray or a rigid supporting structure formed on the chassis of the vehicle, and can be easily mounted on the vehicle or another apparatus.

It should be noted that the cells 100 may support itself through the connection between the local supporting region and the support member 4. However, in some application scenarios, for example, when the support member 4 is a vehicle chassis, the entire side where the supporting region of the cell 100 is located may be in contact with the vehicle chassis. In this case, the above inventive concept of this application may be achieved by locally reinforcing the part of the vehicle chassis corresponding to the supporting region, and the region of the vehicle chassis corresponding to the non-supporting region of the cell 100 may be weakened, or even partially removed.

When the housing of the cell 100 is made of a metal material, the metal housing of the cell 100 has a better heat-conducting property, so that the heat dissipation efficiency of the cell 100 can be improved, thereby improving the heat dissipation effect.

In some embodiments, the cell 100 has a second dimension. The cell has a second dimension, which is a minimum spacing between two imaginary parallel planes sandwiching the cell, a normal of the two parallel planes corresponding to the second dimension is a P direction, and a plurality of cells are arranged along the P direction of the at least one cell.

It should be noted that for a certain cell 100, there may be multiple sets of parallel planes, each set of parallel planes includes two parallel planes, the two parallel planes in each set can imaginarily sandwich the cell 100, a distance exists between the two parallel planes in each set, and the second dimension is a minimum value of such distances.

As shown in FIG. 28, the second dimension may be defined with reference to Feret diameter. The Feret diameter is a measure of an object dimension along a specified direction. In general, the measurement method is defined as the distance between the two parallel planes restricting the object perpendicular to the specified direction.

When the cell 100 is a special-shaped cell, the second dimension may be construed as follows: there are multiple pairs of parallel planes tangent to the contour edge of the cell 100, and when a spacing between one pair of parallel planes is less than spacings between the other pairs of parallel planes, the smallest spacing may be defined as the second dimension.

A normal of the two parallel planes corresponding to the second dimension is a P direction, and a plurality of cells are arranged along the P direction of any cell in the cell array 3.

At least one of the cells meets: 23≤first dimension/second dimension≤208. In an embodiment of this application, 50≤first dimension/second dimension≤70. It is found through a large number of experiments that for the cell 100 that meets the above dimension requirement, the cell 100 can have a small thickness along the second dimension while providing rigidity that meets the supporting requirement, so that the cell 100 has a high heat dissipation capability.

In some embodiments, the cell 100 has a volume V, and The cell body of at least one of the cells 100 meets: 0.0005 mm⁻²≤L/V≤0.002 mm⁻². The volume V of the cell may be obtained by the water displacement method: that is, the cell is put into a container which is full of water, and the volume of water displaced from the container is equal to the volume of the cell. It is found through a large number of experiments that when the cell 100 meets the above limitations, the cross-section of the cell 100 is small, and the cell 100 has a good heat dissipation effect, so that the temperature difference between the inside and outside of the cell 100 is small.

In another implementation provided in this application, a ratio of the surface area S to the volume V of the cell body of the cell 100 is 0.1 mm⁻¹≤S/V≤0.35 mm⁻¹. This ratio may be achieved by the above long and thin cell 100 or through dimension adjustment. By controlling the ratio of the surface area S to the volume V of the cell 100, a sufficient heat dissipation area is provided while ensuring that the length of the cell 100 extends along the Y direction, thereby ensuring the heat dissipation effect of the cell 100.

It should be noted that the surface area of the cell is the sum of the areas of all surfaces of the cell.

In an implementation of this application, the at least one cell 100 has a first end and a second end along the first dimension, at least one of the first end and the second end has an electrode terminal configured to output a current inside the cell 100, and electrode terminals of cells 100 are electrically connected to each other through a connecting member.

Herein, the "first end" and the "second end" of the cell 100 are used for describing the orientation of the cell 100, and are not intended to limit or describe the specific structure of the cell 100. For example, the "first end" and the "second end" of the cell 100 are not intended to limit or describe positive and negative electrodes of the cell 100. In an implementation of the cell 100, as shown in FIG. 2 to FIG. 4, a first electrode terminal 101 of the cell 100 extends out from the first end of the cell 100, and a second electrode terminal 102 of the cell 100 extends out from the second end of the cell 100. In other words, the first dimension direction of the cell 100 may be the direction of a current inside the cell 100, that is, the current direction inside the cell 100 is the first dimension direction. In this way, because the current direction is the same as the first dimension direction of the cell 100, the cell 100 has a larger effective heat dissipation area and a higher heat dissipation efficiency. Herein, the first electrode terminal 101 is a positive electrode of the cell 100, and the second electrode terminal 102 is a negative electrode of the cell 100; or the first electrode terminal 101 is the negative electrode of the cell 100, and the second electrode terminal 102 is the positive electrode of the cell 100. Electrode terminals of cells 100 are connected in series or in parallel to each other through a connecting member.

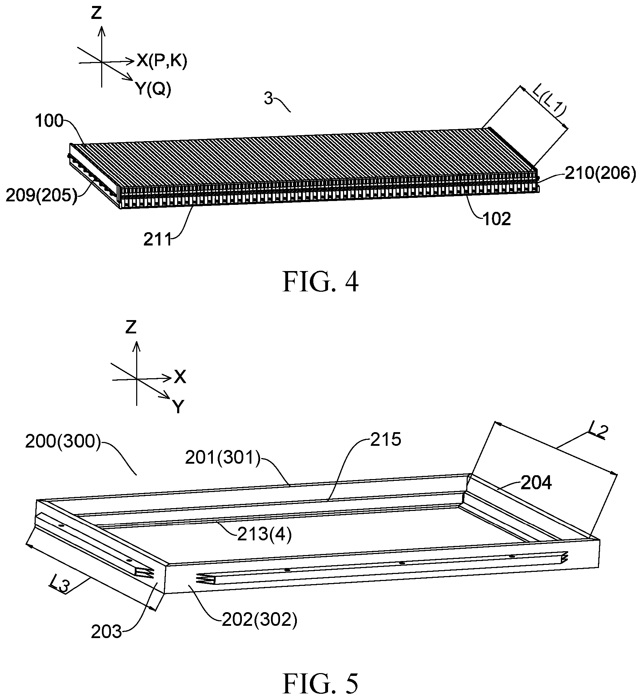

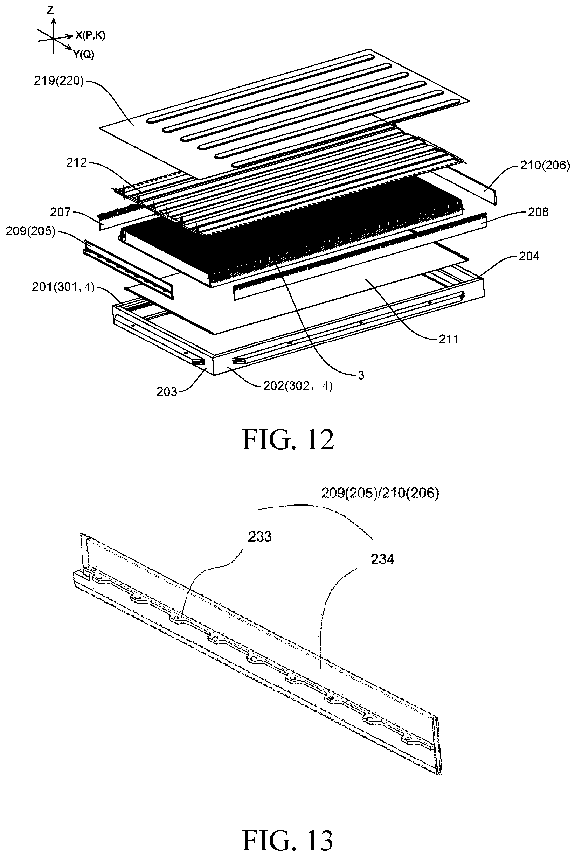

The battery pack further includes two side plate components disposed opposite to each other on two sides of the cell array 3 and configured to sandwich the cell array 3. The side plate components sandwiching the cell array 3 provide a function of limiting expansive deformation of the plurality of cells 100, thereby ensuring starting of an explosion-proof valve 103 and a current interrupt device (CID). Specifically, in some embodiments, as shown in FIG. 4, the side plate components may be a third side beam 203 and a fourth side beam 204; in some other embodiments, as shown in FIG. 12, the side plate components may be a first side plate 209 and a second side plate 210.

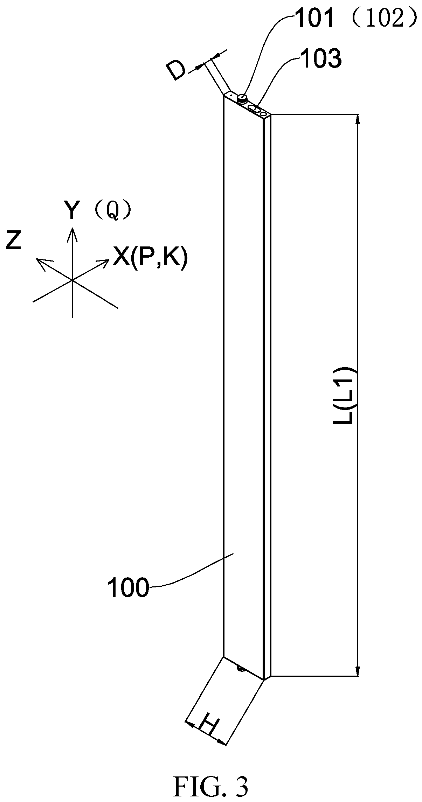

In some embodiments, as shown in FIG. 3 and FIG. 20-FIG. 24, the normal of the two parallel planes corresponding to the first dimension is a Q direction, the battery pack includes a tray for use with a vehicle, the tray includes a first side beam 201 and a second side beam 202 disposed opposite to each other along the Q direction, the support member 4 is the first side beam 201 and the second side beam 202, and two ends of the cell 100 are respectively supported by the first side beam 201 and the second side beam 202.

In some other embodiments, the support member 4 is a plurality of bottom beams, and the bottom beams are located below the cell array 3. The bottom beams are used for supporting the cell array 3. Upper surfaces of the bottom beams may be planes so as to support the cell array 3 in a surface-to-surface manner. In practice, the bottom beam has a rectangular cross-section. There may be a plurality of bottom beams, and the plurality of bottom beams may be disposed in parallel at intervals or disposed crossing each other. The cell array 3 may be fixed to the bottom beams by means such as gluing or threaded connecting members, the battery pack further includes a sealing cover, and the sealing cover and the bottom beams form an accommodating cavity for accommodating the cell array 3. The sealing cover is used for preventing intrusion of dust, water, and the like.

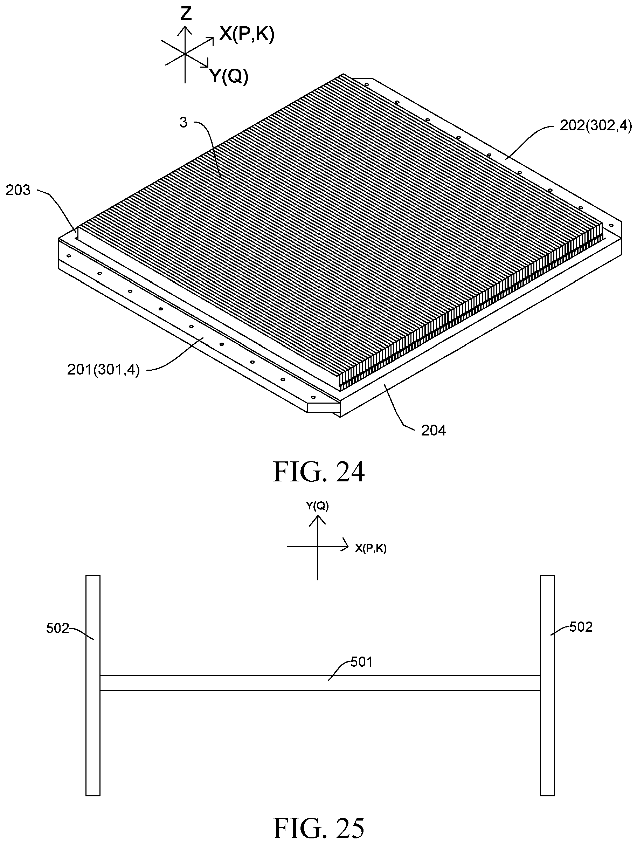

As shown in FIG. 25, the normal of the two parallel planes corresponding to the first dimension is the Q direction, the bottom beams include a first beam 501 and a second beam 502 located on and intersecting the first beam 501, an angle between an extension direction of the first beam 501 and the Q direction is 60-90°, and the cell 100 is supported by the first beam 501. In the embodiment shown in FIG. 25, the first beam 501 is perpendicularly connected to the second beam 502. The connection between the first beam 501 and the second beam 502 may be achieved by means such as, but not limited to, a threaded connecting member or welding. The first beam 501 and the second beam 502 may both be straight beams.

In practice, there are two second beams 502, the two second beams 502 are respectively located at two ends of the first beam 501 and are respectively perpendicular to the first beam 501, and the cell 100 is supported by the first beam 501. The second beam 502 protrudes upward (Z direction) relative to the first beam 501, for example, a lower surface of the second beam 502 may be connected to an upper surface of the first beam 501. During the arrangement of the cells 100, the outermost two cells 100 may respectively lean against side surfaces of two second beams 502 which face toward each other. A center of the cell 100 is located on the first beam 501. A length direction of the cell 100 is perpendicular to a length direction of the first beam 501. By aligning the center of the cell 100 with the first beam 501, the supporting of the cell 100 by using a single beam can be achieved. Certainly, in other embodiments, there may also be a plurality of first beams 501, and the plurality of first beams 501 are parallel to and spaced apart from each other along a second direction.

In other implementations, the normal of the two parallel planes corresponding to the first dimension is the Q direction, the bottom beams may be a plurality of rectangular beams parallel to and spaced apart from each other, an angle between an extension direction of the rectangular beam and the Q direction is 60-90°, and the cell 100 is supported by the rectangular beam. The rectangular beam may be evenly distributed along the Q direction, the extension direction of the rectangular beam is perpendicular to the Y direction, and the cell 100 is located on the evenly distributed rectangular beam.

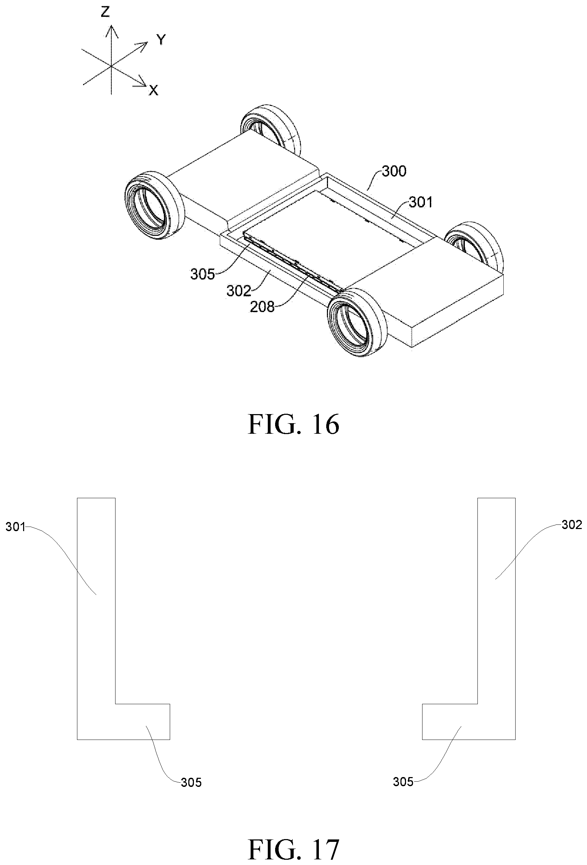

Certainly, the shape of the bottom beam includes, but is not limited to, straight and rectangular, and may also be triangular, trapezoidal, or any other special shape. In another implementation provided in this application, as shown in FIG. 16, the support member 4 is a vehicle chassis, and the cell array 3 is located on the vehicle chassis. The battery pack 200 may be directly formed on an electric vehicle. In other words, the battery pack 200 is an apparatus configured for mounting the cell 100 and formed at any suitable position on the electric vehicle. For example, the battery pack 200 may be directly formed on the chassis of the electric vehicle.

In some embodiments, the vehicle chassis is provided with a cavity 300 recessed downward, to facilitate the assembly of the cell 100.

In a specific implementation provided in this application, the cavity 300 may include a first side wall 301 and a second side wall 302 disposed opposite to each other. The first side wall 301 may extend downward from the chassis of the electric vehicle to obtain an extension portion of the first side wall 301, and the second side wall 302 may extend downward from the chassis of the electric vehicle to obtain an extension portion of the first side wall 302. In this way, as an implementation, the first end of the cell 100 may be supported by the extension portion of the first side wall 301, and the second end of the cell 100 may be supported by the extension portion of the second side wall 302. Accordingly, this application further provides an electric vehicle allowing for arranging cells 100 according to the above technical solution, where a cavity 300 having the same features as a separate tray for use with a vehicle is formed on the electric vehicle, thus forming the battery pack 200 provided by this application.

In some embodiments, as shown in FIG. 2, the normal of the two parallel planes corresponding to the first dimension is the Q direction, a cell placement region is formed in the battery pack 200, the cell array 3 is located in the cell placement region, the battery pack 200 includes one cell array 3, and the cells 100 extend from one side of the cell placement region to the other side of the cell placement region along the Q direction. The battery pack accommodates only one cell in the Q direction.

In some embodiments, the cell has a second dimension, which is a minimum spacing between two imaginary parallel planes sandwiching the cell, a normal of the two parallel planes corresponding to the second dimension is a P direction, and a cell placement region is formed in the battery pack 200, the cell array 3 is located in the cell placement region, N cell arrays 3 along the P direction and M cell arrays 3 along the Q direction are disposed in the cell placement region, the cell arrays 3 are electrically connected to each other through connecting members between electrode terminals of cells, N is greater than or equal to 1, and M is greater than or equal to 1. An electrode terminal of the last cell of the (N-1)^{th} cell array 3 is connected to an electrode terminal of the first cell of the N^{th} cell array 3 through a connecting member, and N is greater than or equal to 1. In other words, in the battery pack, a plurality of cell arrays 3 may be disposed along the arrangement direction of the cells 100, that is, the battery pack 200 is provided therein with multiple columns of cell arrays 3.

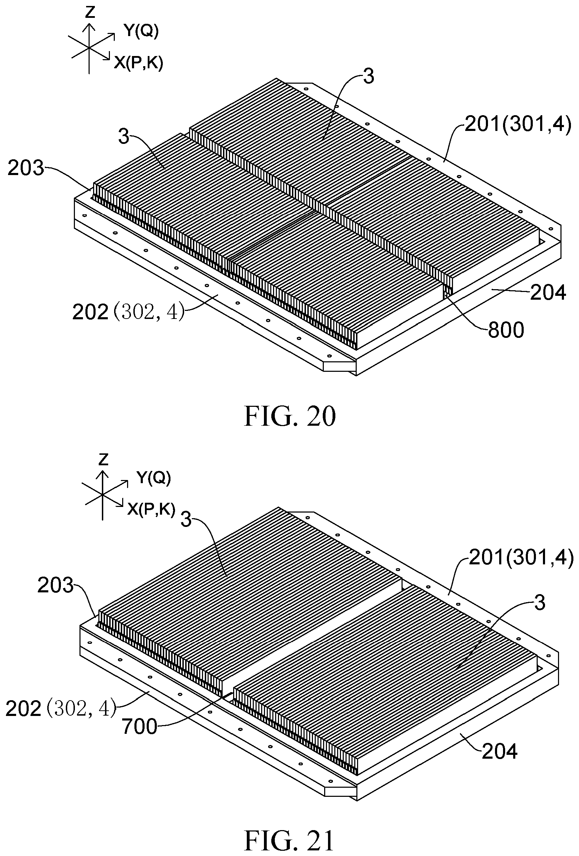

Specifically, as shown in FIG. 21, the first partition plate 700 divides the shown cell array 3 along the P direction of the battery pack 200 into two cell arrays 3. The last cell 100 of one cell array 3 is connected to the first cell of the other cell array 3 through a connecting member.

According to the battery pack 200 provided by this application, a cell placement region is formed in the battery pack, the cell array 3 is located in the cell placement region, M cell arrays 3 along the Q direction are disposed in the cell placement region, the cell arrays 3 are electrically connected to each other through connecting members between electrode terminals of cells, and M is greater than or equal to 1. An electrode terminal of the last cell of the (M-1)^{th} cell array 3 is connected to an electrode terminal of the first cell of the M^{th} cell array 3 through a connecting member, and M is greater than or equal to 1. In other words, in the extension direction of the cell 100, a plurality of cells 100 may be accommodated, that is, the battery pack 200 is provided therein with multiple rows of cell arrays 3.

Specifically, as shown in FIG. 20, the second partition plate 800 divides the cell array 3 along the Q direction of the battery pack 2000 into two cell arrays 3. The last cell 100 of one cell array 3 is connected to the first cell of the other cell array 3 through a connecting member.

According to the battery pack 200 provided by this application, a cell placement region is formed in the battery pack, the cell array 3 is located in the cell placement region, N cell arrays 3 along the P direction and M cell arrays 3 along the Q direction are disposed in the cell placement region, the cell arrays 3 are electrically connected to each other through connecting members between electrode terminals of cells, N is greater than or equal to 1, and M is greater than or equal to 1. In other words, in the P direction of the battery pack, the cell placement region is divided into a plurality of battery placement subregions, and in the extension direction of the cell 100, i.e., the Q direction, a plurality of cells 100 may be accommodated. That is, the battery pack 200 is provided therein with multiple rows and multiple columns of cell arrays 3.

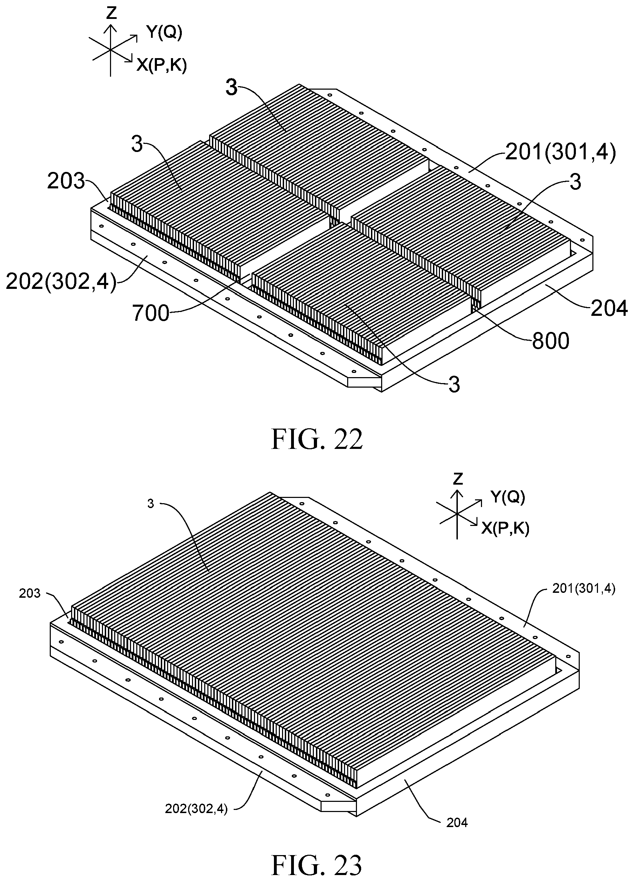

Specifically, as shown in FIG. 22, a first partition plate 700 and a second partition plate 800 are disposed in the battery pack 200, and the first partition plate 700 and the second partition plate 800 divide a plurality of cells into two rows and two columns of cell arrays 3. Any two of the cell arrays 3 are connected to each other through connecting members between electrode terminals.

In the foregoing description, the first partition plate 700 and the second partition plate 800 may be reinforcing ribs, or may be heat insulation foam or other mechanical member, which is not limited in this application.

The quantity of cells 100 in the cell array 3 is not particularly limited in this application, and depending on different vehicle types and different power requirements, different numbers of cells 100 may be arranged. In some specific examples of this application, the quantity of cells in the cell array 3 is 60-200. In some other specific examples of this application, the quantity of cells in the cell array 3 is 80-150.

It should be noted that the quantity of cells 100 in the cell array of this application is not limited, and for example, may be 2. The battery pack of this application may include one cell array described above, or may include a plurality of cell arrays. The cell arrays may be the same or different. In addition to the above-mentioned cell array, the battery pack may include other types of cells, for example, smaller cells disposed according to the space inside the battery pack, and the specific placement of such other types of cells is not limited by the cell array of the present invention.

As shown in FIG. 2 to FIG. 25, according to another aspect of this application, a battery pack 200 is provided, including a cell array 3 and a support member 4.

The cell array 3 includes a plurality of cells 100, the cell 100 has a dimension A, and the dimension A is a length of a minimum enclosing rectangle of the cell 100. At least one of the cells 100 meets: 600 mm≤dimension A≤2500 mm.

The minimum enclosing rectangle is introduced for the ease of understanding the dimension A, and does not physically exist in the solutions of this application.

Specifically, the minimum enclosing rectangle may be construed as follows: for the cell 100, assuming there is a cuboid housing and inner walls of six sides of the cuboid housing abut against the outer contour of the cell, the housing of the cuboid housing is the minimum enclosing rectangle. The dimension A is a length of the minimum enclosing rectangle. Certainly, for a cuboid, its length>height>width.

The cell 100 may be of various shapes, for example, may be of a regular geometry or of an irregular geometry. For example, the cell may be square, round, polygonal, triangular, or of any other shape. For example, the cell is a special-shaped cell. It may be understood that the shape of the cell is not limited in this application.

The cell 100 includes a casing and a core located inside the casing. A supporting region is formed on the casing, and The support member 4 is connected to the supporting region to support the cell 100. The casing may include a casing body and a cover plate sealing the casing body. The casing body is made of aluminum or steel.

It should be noted that the supporting region may be an outer surface of the casing body or the cover plate, or may be a partial region of an outer surface of the casing body or the cover plate, or may be any combination of an outer surface of the casing body, an outer surface of the cover plate, a partial region of an outer surface of the casing body, and a partial region of an outer surface of the cover plate, as long as the supporting region can be connected to the support member 4 to support the cell 100.

In practice, the supporting region may be disposed at two ends of the cell 100 along the dimension A, so that the the cell 100 may be supported by the support member 4 along the dimension A.

It is found that the dimension A of the cell 100 may be designed to be 600 mm-2500 mm. Because the cell 100 is long enough, the cell 100 can be directly supported by the support member 4. By forming a plurality of cells 100 into a module, the cells 100 themselves can provide a supporting function, and replace the reinforcing structure to ensure the structural strength of the battery pack 200. In this way, the use of transverse beams 500 and/or longitudinal beams 600 in the battery pack 200 can be reduced, or even the use of transverse beams 500 and/or longitudinal beams 600 in the battery pack 200 can be avoided, so that the space occupied by transverse beams 500 and/or longitudinal beams 600 in the battery pack 200 can be reduced, thereby improving the utilization of the space inside the battery pack 200, and allowing as many cells 100 as possible to be disposed in the battery pack 200. In this way, the capacity, the voltage, and the battery life of the entire battery pack can be improved. For example, in an electric vehicle, such a design can improve the space utilization from about 40% to 60% or even higher, for example, 80%. It is found through multiple experiments that if the cell 100 is designed as a pouch cell, that is, the housing of the cell is an aluminum-plastic composite film and the aluminum-plastic composite film is used to support the cell, the aluminum-plastic composite film of the cell may be worn out, and the pouch cell in the battery pack is prone to displacement, which accelerates the wear of the cell. Along with the wear of the aluminum-plastic composite film, the cell 100 fails, resulting in a short battery life of the battery pack. In addition, the heat dissipation performance of the pouch cell is poor, and after the pouch cells are designed into the dimension described in this application and arranged in the battery pack, the heat dissipation performance of the entire pouch cell is poor. Therefore, in this application, the cell 100 includes a casing, a cover plate, and a core located inside a space formed by the casing and the cover plate. In other words, the cell is a hard-case cell. When the dimension A of the cell is 600 mm-2500 mm, a supporting region is formed on the casing and/or the cover plate, and the support member 4 is connected to the supporting region to support the cell. Herein, that the support member 4 is connected to the supporting region may be that the support member 4 is in direct contact with the supporting region, or may be that the support member 4 is in indirect contact or connection with the supporting region through another component, which may be set depending on usage scenarios and is not limited in this application.

In addition, because no transverse beam and/or longitudinal beam needs to be disposed in the battery pack 200, one one hand, the fabrication process of the battery pack 200 is simplified, the assembly complexity of the cell 100 is reduced, and the production costs are reduced; In another case, the weight of the entire battery pack 200 is reduced, thereby achieving a lightweight battery pack. Particularly, when the battery pack is mounted on an electric vehicle, the battery life of the electric vehicle can also be improved, and the weight of the electric vehicle can be reduced.

In some embodiments, 600 mm≤dimension A≤1500 mm, for example, 600 mm≤dimension A≤1000 mm. The cell 100 having such a length is long enough to be supported by the support member 4, and the cell 100 having such a length is not too long. When used in the battery pack 200, the rigidity of the cell 100 is large enough.

In this application, the specific form of the battery pack is not particularly limited, as long as the battery pack includes the support member 4, the cell array 3 is located on the support member 4, the cells 100 are supported by the support member 4. The specific structure of the support member 4 is not limited in this application, as long as the cells 100 can be supported by the support member 4. The specific structure of the support member 4 will be described below. The cells 100 are supported by the support member 4. The cells 100 may be directly supported by the support member 4, that is, respectively disposed on the support member 4, or fixed on the support member 4. The specific fixing manner will be described in detail below. The specific supporting and fixing manners are not limited in this application.

The support member 4 is used for supporting the cell array 3. The support member 4 is usually of a rigid structure. The support member 4 may be an independently fabricated tray or a rigid supporting structure formed on the chassis of the vehicle, and can be easily mounted on the vehicle or another apparatus.

When the housing of the cell 100 is made of a metal material, the metal housing of the cell 100 has a better heat-conducting property, so that the heat dissipation efficiency of the cell 100 can be improved, thereby improving the heat dissipation effect.

In some embodiments, the plurality of cells are arranged along a direction K, and the direction K is a width direction of a minimum enclosing rectangle of the at least one cell in the cell array 3.

The cell 100 has a dimension B, the cell has a dimension B, which is a width of a minimum enclosing rectangle of the cell, the normal of the two parallel planes corresponding to the dimension B is the direction K, and a plurality of cells are arranged along the K direction of the at least one cell.

At least one of the cells meets: 10≤dimension A/dimension B≤208. In some embodiments, at least one of the cells meets: 23≤dimension A/dimension B≤208. In an embodiment of this application, 50≤dimension A/dimension B≤70. It is found through a large number of experiments that for the cell 100 that meets the above dimension requirement, the cell 100 can have a small thickness along the dimension B while providing rigidity that meets the supporting requirement, so that the cell 100 has a high heat dissipation capability.

In some embodiments, the plurality of cells 100 are arranged along a direction K, and the direction K is a height direction of a minimum enclosing rectangle of the at least one cell 100 in the cell array 3. The cell 100 has a dimension C, which is a height of a minimum enclosing rectangle of the cell 100.

At least one of the cells 100 meets: 10≤dimension A/dimension C≤208, for example, 23≤dimension A/dimension C≤208, for example, 50≤dimension A/dimension C≤70. It is found through a large number of experiments that for the cell 100 that meets the above dimension requirement, the cell 100 can have a small thickness along the dimension C while providing rigidity that meets the supporting requirement, so that the cell 100 has a high heat dissipation capability.

The battery pack 200 further includes two side plate components disposed opposite to each other on two sides of the cell array 3 and configured to sandwich the cell array 3. The side plate components sandwiching the cell array 3 provide a function of limiting expansive deformation of the plurality of cells 100, thereby ensuring starting of an explosion-proof valve 103 and a current interrupt device (CID). Specifically, in some embodiments, as shown in FIG. 4, the side plate components may be a third side beam 203 and a fourth side beam 204; In some other embodiments, as shown in FIG. 12, the side plate components may be a first side plate 209 and a second side plate 210.

In some embodiments, as shown in FIG. 3 and FIG. 20-FIG. 24, the battery pack 200 includes a tray for use with a vehicle, the tray includes a first side beam 201 and a second side beam 202 disposed opposite to each other along a length direction of a minimum enclosing rectangle of the cell 100, the support member 4 is the first side beam 201 and the second side beam 202, and two ends of the cell 100 are respectively supported by the first side beam 201 and the second side beam 202.

In some other embodiments, the support member 4 is a plurality of bottom beams, and the bottom beams are located below the cell array 3. The bottom beams are used for supporting the cell array 3. Upper surfaces of the bottom beams may be planes so as to support the cell array 3 in a surface-to-surface manner. In practice, the bottom beam has a rectangular cross-section. There may be a plurality of bottom beams, and the plurality of bottom beams may be disposed in parallel at intervals or disposed crossing each other. The cell array 3 may be fixed to the bottom beams by means such as gluing or threaded connecting members, the battery pack further includes a sealing cover, and the sealing cover and the bottom beams form an accommodating cavity for accommodating the cell array 3. The sealing cover is used for preventing intrusion of dust, water, and the like.

As shown in FIG. 25, the bottom beams include a first beam 501 and a second beam 502 located on and intersecting the first beam 501, an angle between an extension direction of the first beam 501 and the length direction of the minimum enclosing rectangle of the cell is 60-90°, and the cell 100 is supported by the first beam 501. In the embodiment shown in FIG. 25, the first beam 501 is perpendicularly connected to the second beam 502. The connection between the first beam 501 and the second beam 502 may be achieved by means such as, but not limited to, a threaded connecting member or welding. The first beam 501 and the second beam 502 may both be straight beams.

In practice, there are two second beams 502, the two second beams 502 are respectively located at two ends of the first beam 501 and are respectively perpendicular to the first beam 501, and the cell 100 is supported by the first beam 501. The second beam 502 protrudes upward (Z direction) relative to the first beam 501, for example, a lower surface of the second beam 502 may be connected to an upper surface of the first beam 501. During the arrangement of the cells 100, the outermost two cells 100 may respectively lean against side surfaces of two second beams 502 which face toward each other. A center of the cell 100 is located on the first beam 501. A length direction of the cell 100 is perpendicular to a length direction of the first beam 501. By aligning the center of the cell 100 with the first beam 501, the supporting of the cell 100 by using a single beam can be achieved. Certainly, in other embodiments, there may also be a plurality of first beams 501, and the plurality of first beams 501 are parallel to and spaced apart from each other along a second direction.

Certainly, the shape of the bottom beam includes, but not limited to, straight and rectangular, and may also be triangular, trapezoidal, or any other special shape. In another implementation provided in this application, as shown in FIG. 16, the support member 4 is a vehicle chassis, and the cell array 3 is located on the vehicle chassis. The battery pack 200 may be directly formed on an electric vehicle. In other words, the battery pack 200 is an apparatus configured for mounting the cell 100 and formed at any suitable position on the electric vehicle. for example, the battery pack 200 may be directly formed on the chassis of the electric vehicle.

In some embodiments, the vehicle chassis is provided with a cavity 300 recessed downward, to facilitate the assembly of the cell 100.

In a specific implementation provided in this application, the cavity 300 may include a first side wall 301 and a second side wall 302 disposed opposite to each other. The first side wall 301 may extend downward from the chassis of the electric vehicle to obtain an extension portion of the first side wall 301, and the second side wall 302 may extend downward from the chassis of the electric vehicle to obtain an extension portion of the first side wall 302. In this way, as an implementation, the first end of the cell 100 may be supported by the extension portion of the first side wall 301, and the second end of the cell 100 may be supported by the extension portion of the second side wall 302. Accordingly, this application further provides an electric vehicle allowing for arranging cells 100 according to the above technical solution, where a cavity 300 having the same features as a separate tray for use with a vehicle is formed on the electric vehicle, thus forming the battery pack 200 provided by this application.

In some embodiments, as shown in FIG. 2, a cell placement region is formed in the battery pack 200, the cell array 3 is located in the cell placement region, the battery pack 200 includes one cell array 3, and the cells extend from one side of the cell placement region to the other side of the cell placement region along a length direction of a minimum enclosing rectangle of the cell 100. The battery pack 200 accommodates only one cell in the length direction of the minimum enclosing rectangle of the cell 100.

In some embodiments, a cell placement region is formed in the battery pack 200, the cell array 3 is located in the cell placement region, N cell arrays 3 along a width direction of the minimum enclosing rectangle of the cell are disposed in the cell placement region, the cell arrays 3 are electrically connected to each other through connecting members between electrode terminals of cells, and N is greater than or equal to 1.

M cell arrays 3 along a length direction of the minimum enclosing rectangle of the cell are disposed in the cell placement region, the cell arrays 3 are electrically connected to each other through connecting members between electrode terminals of cells, and M is greater than or equal to 1.

Specifically, as shown in FIG. 21, the first partition plate 700 divides the shown cell array 3 along the K direction of the battery pack 200 into two cell arrays 3. The last cell 100 of one cell array 3 is connected to the first cell of the other cell array 3 through a connecting member.

According to the battery pack 200 provided by this application, a cell placement region is formed in the battery pack, the cell array 3 is located in the cell placement region, M cell arrays 3 along the Q direction are disposed in the cell placement region, the cell arrays 3 are electrically connected to each other through connecting members between electrode terminals of cells, and M is greater than or equal to 1. An electrode terminal of the last cell of the (M-1)^{th} cell array 3 is connected to an electrode terminal of the first cell of the M^{th} cell array 3 through a connecting member, and M is greater than or equal to 1. In other words, in the extension direction of the cell 100, a plurality of cells 100 may be accommodated. That is, the battery pack 200 is provided therein with multiple rows of cell arrays 3.

Specifically, as shown in FIG. 20, the second partition plate 800 divides the cell array 3 along the Q direction of the battery pack 2000 into two cell arrays 3. The last cell 100 of one cell array 3 is connected to the first cell of the other cell array 3 through a connecting member.

According to the battery pack 200 provided by this application, a cell placement region is formed in the battery pack, the cell array 3 is located in the cell placement region, N cell arrays 3 along the K direction and M cell arrays 3 along the Q direction are disposed in the cell placement region, the cell arrays 3 are electrically connected to each other through connecting members between electrode terminals of cells, N is greater than or equal to 1, and M is greater than or equal to 1. In other words, in the K direction of the battery pack, the cell placement region is divided into a plurality of battery placement subregions, and in the extension direction of the cell 100, i.e., the Q direction, a plurality of cells 100 may be accommodated. That is, the battery pack 200 is provided therein with multiple rows and multiple columns of cell arrays 3.

Specifically, as shown in FIG. 22, a first partition plate 700 and a second partition plate 800 are disposed in the battery pack 200, and the first partition plate 700 and the second partition plate 800 divide a plurality of cells into two rows and two columns of cell arrays 3. Any two of the cell arrays 3 are connected to each other through connecting members between electrode terminals.

In the foregoing description, the first partition plate 700 and the second partition plate 800 may be reinforcing ribs, or may be heat insulation foam or other mechanical member, which is not limited in this application.
a cell placement region is formed in the battery pack, the cell array 3 is located in the cell placement region, J cell arrays 3 along a height direction of the minimum enclosing rectangle of the cell are disposed in the cell placement region, the cell arrays 3 are electrically connected to each other through connecting members between electrode terminals of cells, and J is greater than or equal to 1.

The quantity of cells 100 in the cell array 3 is not particularly limited in this application, and depending on different vehicle types and different power requirements, different numbers of cells 100 may be arranged. In some specific examples of this application, the quantity of cells in the cell array 3 is 60-200. In some other specific examples of this application, the quantity of cells in the cell array 3 is 80-150.

As shown in FIG. 2 to FIG. 25, according to still another aspect of this application, a battery pack 200 is provided, including a cell array 3 and a support member 4.

The cell array 3 includes a plurality of cells 100, At least one of the cells 100 includes a cell body and electrode terminals extending out of the cell body and configured to output a current inside the cell body, the cell body is substantially a cuboid, the cell body has a length L, and 600 mm≤L≤2500 mm. The cell 100 includes a casing and a core located inside the casing. A supporting region is formed on the casing, and The support member 4 is connected to the supporting region to support the cell 100.

It should be noted that that the cell body is substantially a cuboid may be construed as that the cell body may be cuboid or cubic, or may be partially special-shaped but basically cuboid or cubic, or may be largely of a cuboid or cubic shape having a notch, a bump, a chamfer, an arc portion, or a bent portion.

In the related art, because the dimension of the cell 100 is small, the length L of the cell body is short, which is far less than the dimension of the battery pack in the Y direction or the X direction, resulting in that the cell 100 cannot provide the function of enhancing the structural strength of the battery pack. Therefore, transverse beams 500 and/or longitudinal beams 600 need to be disposed in the battery pack 200 (as shown in FIG. 1), to facilitate the assembly of the cell 100. After the cell 100 is mounted in the battery pack 200 through the battery module 400, the battery module is fixed to the neighboring transverse beam 500 and/or longitudinal beam 600 through a fastener.

In the related art, because transverse beams 500 and/or longitudinal beams 600 are disposed in the battery pack, the transverse beams 500 and/or longitudinal beams 600 occupy a large part of the space for accommodating cells in the battery pack 200, leading to low utilization of the volume of the battery pack. Generally, the volume utilization of the battery pack 200 is about 40% or even lower. In other words, in the related art, only about 40% of the space inside the battery pack 200 can be used for mounting cells. As a result, the quantity of cells 100 that the battery pack 200 can accommodate is limited, the capacity and the voltage of the entire battery pack are restricted, and the battery life of the battery pack is short.

It is found that the length L of the cell body of the cell 100 may be designed to be 600 mm-2500 mm. Because the cell body of the cell 100 is long enough, the cell body itself can provide a supporting function, and replace the reinforcing structure to ensure the structural strength of the battery pack 200. In this way, the use of transverse beams 500 and/or longitudinal beams 600 in the battery pack 200 can be reduced, or even the use of transverse beams 500 and/or longitudinal beams 600 in the battery pack 200 can be avoided, so that the space occupied by transverse beams 500 and/or longitudinal beams 600 in the battery pack 200 can be reduced, thereby improving the utilization of the space inside the battery pack 200, and allowing as many cells 100 as possible to be disposed in the battery pack 200. In this way, the capacity, the voltage, and the battery life of the entire battery pack can be improved. For example, in an electric vehicle, such a design can improve the space utilization from about 40% to 60% or even higher, for example, 80%. It is found through multiple experiments that if the cell 100 is designed as a pouch cell, that is, the housing of the cell is an aluminum-plastic composite film and the aluminum-plastic composite film is used to support the cell, the aluminum-plastic composite film of the cell may be worn out, and the pouch cell in the battery pack is prone to displacement, which accelerates the wear of the cell. Along with the wear of the aluminum-plastic composite film, the cell 100 fails, resulting in a short battery life of the battery pack. In addition, the heat dissipation performance of the pouch cell is poor, and after the pouch cells are designed into the dimension described in this application and arranged in the battery pack, the heat dissipation performance of the entire pouch cell is poor. Therefore, in this application, the cell 100 includes a casing, a cover plate, and a core located inside a space formed by the casing and the cover plate. In other words, the cell is a hard-case cell. When the length L of the cell is 600 mm-2500 mm, a supporting region is formed on the casing and/or the cover plate, and the support member 4 is connected to the supporting region to support the cell. Herein, that the support member 4 is connected to the supporting region may be that the support member 4 is in direct contact with the supporting region, or may be that the support member 4 is in indirect contact or connection with the supporting region through another component, which may be set depending on usage scenarios and is not limited in this application.

In addition, because no transverse beam and/or longitudinal beam needs to be disposed in the battery pack 200, one one hand, the fabrication process of the battery pack 200 is simplified, the assembly complexity of the cell 100 is reduced, and the production costs are reduced; In another case, the weight of the entire battery pack 200 is reduced, thereby achieving a lightweight battery pack. Particularly, when the battery pack is mounted on an electric vehicle, the battery life of the electric vehicle can also be improved, and the weight of the electric vehicle can be reduced.

In this application, the specific form of the battery pack is not particularly limited, as long as the battery pack includes the support member 4, the cell array 3 is located on the support member 4, the cells 100 are supported by the support member 4. The specific structure of the support member 4 is not limited in this application, as long as the cells 100 can be supported by the support member 4. The specific structure of the support member 4 will be described below. The cells 100 are supported by the support member 4. The cells 100 may be directly supported by the support member 4, that is, respectively disposed on the support member 4, or fixed on the support member 4. The specific fixing manner will be described in detail below. The specific supporting and fixing manners are not limited in this application.

The support member 4 is used for supporting the cell array 3. The support member 4 is usually of a rigid structure. The support member 4 may be an independently fabricated tray or a rigid supporting structure formed on the chassis of the vehicle. The support member 4 is used for maintaining the complete appearance of the battery pack, and can be easily mounted on the vehicle or another apparatus.

In this application, because the length L of the cell body of the cell 100 is long, the cell body itself can provide a supporting function, so that the use of transverse beams and/or longitudinal beams in the battery pack to enhance the structural strength can be reduced, thereby improving the utilization of the space inside the battery pack, and allowing more cells to be disposed in the battery pack.

The cell body of the cell 100 has three directions perpendicular to each other, namely, X direction, Y direction, and Z direction. Every two of the X direction, the Y direction, the Z direction are perpendicular to each other. The X direction is the arrangement direction of the cell 100, the Y direction is the length direction of the cell 100, and the Z direction is the height direction of the cell 100. In practice, for example, in an embodiment shown in FIG. 20 to FIG. 23, when the battery pack 200 is mounted on a vehicle, the length direction of the battery pack 200 may be parallel to a longitudinal direction of a vehicle 1, the width direction of the battery pack 200 may be parallel to a transverse direction of the vehicle 1, the Y direction may be parallel to the transverse direction of the vehicle 1, the X direction may be parallel to the longitudinal direction of the vehicle 1, and the Z direction may be parallel to a vertical direction of the vehicle 1. For example, in an embodiment shown in FIG. 24, when the battery pack 200 is mounted on a vehicle, the length direction of the battery pack 200 may be parallel to a longitudinal direction of a vehicle 1, the width direction of the battery pack 200 may be parallel to a transverse direction of the vehicle 1, the Y direction may be parallel to the longitudinal direction of the vehicle 1, the X direction may be parallel to the transverse direction of the vehicle 1, and the Z direction may be parallel to a vertical direction of the vehicle 1. Certainly, when the battery pack 200 is mounted on a vehicle, the X direction, the Y direction, and the Z direction may also correspond to the actual directions of the vehicle in other relationship, and the actual correspondence depends on the mounting direction of the battery pack 200.

Unless otherwise particularly stated, in this application, a vehicle traveling direction is the longitudinal direction of the vehicle; a direction perpendicular to and coplanar with the vehicle traveling direction is the transverse direction of the vehicle, which is generally a horizontal direction; and an up-down direction is the vertical direction of the vehicle, which is generally an upright direction.

In some embodiments, the cells 100 may be arranged in sequence along the X direction, and the quantity of cells may not be limited. With such an arrangement, as the quantity of cells arranged in the battery pack increases, the heat dissipation performance of the entire battery pack degrades. To improve the safety performance of the entire battery pack, L/H or L/D is limited, so that the thickness along the X direction and the height along the Z direction are relatively small, and the surface area of a single cell is greater than the surface area of a cell in the related art. In this way, the heat dissipation area of the cell can be increased, to improve the heat dissipation efficiency of the cell, thereby improving the safety performance of the entire battery pack, to make the battery pack safer and more reliable.

On the other hand, when the housing of the cell 100 is made of a metal material, the metal housing of the cell 100 has a better heat-conducting property, so that the heat dissipation efficiency of the cell 100 can be improved, thereby improving the heat dissipation effect.

The plurality of cells 100 may be arranged in the cell array 3 in various manners. The cell body has a length L, a thickness D, and a height H, a thickness direction thereof being an X direction, a length direction thereof being a Y direction, and a height direction thereof being a Z direction.

In an implementation provided in this application, the plurality of cells 100 may be arranged at intervals or arranged closely along the X direction. As shown in FIG. 2, in this implementation, the cells are arranged closely along the X direction, so as to make full use of the space.

In some embodiments, the plurality of cells 100 are arranged along the X direction of at least one cell in the cell array 3, and the X direction is a thickness direction of any cell 100 in the cell array 3. The cell body has a thickness D, and at least one of the cells 100 meets: 10≤L/D≤208, for example, 23≤L/D≤208, for example, 50≤L/D≤ 70. It is found through a large number of experiments that for the cell 100 that meets the above dimension requirement, the cell 100 can have a small thickness in the X direction while providing rigidity that meets the supporting requirement, so that the cell 100 has a high heat dissipation capability.

In some other embodiments, the plurality of cells 100 are arranged along the Z direction of at least one cell in the cell array 3, and the Z direction is a height direction of any cell 100 in the cell array 3. The cell body has a height H, and at least one of the cells 100 meets: 10≤L/H≤ 208, for example, 23≤L/H≤ 208. In some embodiments, 50≤L/H≤ 70. It is found through a large number of experiments that for the cell 100 that meets the above dimension requirement, the cell body can have a small thickness in the Z direction while providing rigidity that meets the supporting requirement, so that the cell body has a high heat dissipation capability.

It should be noted that during the arrangement of the plurality of cells 100, an array with flush ends maybe formed, or the cells may form an angle with the X direction or the Z direction, that is, may be obliquely arranged. The arrangement directions of the plurality of cells 100 may be the same, or may be partially different or completely different, as long as each cell is distributed along a predetermined direction.

In some embodiments, 600 mm≤L≤1500 mm, for example, 600 mm≤L≤1000 mm. The cell 100 having such a length is long, and when used in the battery pack 200, only a single cell 100 needs to be disposed along the first direction.

In some embodiments, the cell body of the cell 100 has a volume V, and at least one of the cells 100 meets: 0.0005 mm⁻²≤L/V≤0.002 mm⁻². It is found through a large number of experiments that when the cell 100 meets the above limitations, the cross-section of the cell body is small, and the cell body has a good heat dissipation effect, so that the temperature difference between the inside and outside of the cell body is small.

In another implementation provided in this application, a ratio of the surface area S to the volume V of the cell body of the cell 100 is 0.1 mm⁻¹≤S/V≤0.35 mm⁻¹. This ratio may be achieved by the above long and thin cell 100, or through dimension adjustment. By controlling the ratio of the surface area S to the volume V of the cell 100, a sufficient heat dissipation area is provided while ensuring that the length of the cell body extends along the Y direction, thereby ensuring the heat dissipation effect of the cell 100.

In some embodiments, the cell body has a volume V, and a relationship between the height H of the cell body and the volume V of the corresponding cell body is 0.0001 mm⁻²≤HN≤0.00015 mm⁻².

It should be noted that the surface area of the cell is the sum of the areas of all surfaces of the cell. When some surfaces of the cell is partially recessed or partially protrude, the surface area of the cell is calculated by using a length L, a width H, and a thickness D of a square defining the external contour of the cell. A specific calculation formula is S=2(LD+LH+HD).

As shown in FIG. 3 to FIG. 4 and FIG. 20 to FIG. 24, the cell body has a length L, a thickness D, and a height H, a thickness direction thereof being an X direction, a length direction thereof being a Y direction, and a height direction thereof being a Z direction; and the height H of the cell body is greater than or equal to the thickness D of the cell body, at least one of the cells meets: 23≤L/D≤208, and 4≤L/H≤21, and the plurality of cells are arranged along the X direction of at least one cell in the cell array 3. In solutions of some embodiments, at least one of the cells meets: 9≤L/H≤ 13. It is found through a large number of experiments that for the cell body that meets the above dimension requirement, the cell body can have a small thickness in the X direction while providing rigidity that meets the supporting requirement, so that the cell body has a high heat dissipation capability, and the cells 100 can be conveniently arranged closely in the X direction.

In some exemplary implementations of this application, the at least one cell 100 has a first end and a second end along the Y direction, at least one of the first end and the second end has an electrode terminal configured to output a current inside the cell, and electrode terminals of cells 100 are electrically connected to each other through a connecting member.

Herein, the "first end" and the "second end" of the cell 100 are used for describing the orientation of the cell 100, and are not intended to limit or describe the specific structure of the cell 100. For example, the "first end" and the "second end" of the cell 100 are not intended to limit or describe positive and negative electrodes of the cell 100. In an implementation of the cell 100, as shown in FIG. 2 to FIG. 4, a first electrode terminal 101 of the cell 100 extends out from the first end of the cell 100 facing toward the Y direction, and a second electrode terminal 102 of the cell 100 extends out from the second end of the cell 100 facing toward the Y direction. In other words, the length direction of the cell 100 may be the direction of a current inside the cell 100, that is, the current direction inside the cell 100 is the Y direction. In this way, because the current direction is the same as the length direction of the cell 100, the cell 100 has a larger effective heat dissipation area and a higher heat dissipation efficiency. Herein, the first electrode terminal 101 is a positive electrode of the cell 100, and the second electrode terminal 102 is a negative electrode of the cell 100; or the first electrode terminal 101 is the negative electrode of the cell 100, and the second electrode terminal 102 is the positive electrode of the cell 100. Electrode terminals of cells 100 are connected in series or in parallel to each other through a connecting member.

In an implementation, the thickness directions of at least a part of the cells 100 extend along the X direction, that is, a plurality of cells are arranged along the thickness direction of the cell.

In some embodiments, the cell array 3 includes a plurality of cells 100 arranged in sequence along the X direction, and the cell 100 has a length extending along the Y direction and a height extending along the Z direction. In other words, a plurality of cells 100 are arranged along the thickness direction, and extend along the length direction, thereby making full use of the space inside the battery pack, and allowing more cells to be disposed.

The cell 100 has a first end and a second end along the length direction, the first end and/or the second end has an electrode terminal configured to output a current inside the cell, and electrode terminals of cells are connected to each other through a connecting member.

Herein, the "first end" and the "second end" of the cell 100 are used for describing the orientation of the cell 100, and are not intended to limit or describe the specific structure of the cell 100. for example, the "first end" and the "second end" of the cell 100 are not intended to limit or describe positive and negative electrodes of the cell 100. In an implementation of the cell 100, as shown in FIG. 2 to FIG. 4, a first electrode terminal 101 of the cell 100 extends out from the first end of the cell 100 along the length direction, and a second electrode terminal 102 of the cell 100 extends out from the second end of the cell 100 along the length direction. In other words, the length direction of the cell 100 may be the direction of a current inside the cell 100, that is, the current direction inside the cell 100 is the Y direction. In this way, because the current direction is the same as the length direction of the cell 100, the cell 100 has a larger effective heat dissipation area and a higher heat dissipation efficiency. Herein, the first electrode terminal 101 is a positive electrode of the cell 100, and the second electrode terminal 102 is a negative electrode of the cell 100; or the first electrode terminal 101 is the negative electrode of the cell 100, and the second electrode terminal 102 is the positive electrode of the cell 100. Electrode terminals of cells 100 are connected in series or in parallel to each other through a connecting member.

In the related art, how to design the dimension of a rectangular cell 100 to achieve both a suitable battery capacity and a good heat dissipation effect has long been one of the problems to be solved in the battery field.

In an implementation provided in this application, the ratio of the length L and the thickness D of the cell body of the at least one cell 100 meets 23≤L/D≤208. Under this ratio, a moderately long, and thin cell 100 can be obtained, and while ensuring that the length of the cell 100 extends along the first direction, a suitable resistance, a large heat dissipation area, and high heat dissipation efficiency can be maintained, providing good adaptability for various vehicle types.

In an implementation provided in this application, the ratio of the length L and the thickness D of the cell body of the at least one cell 100 meets 50≤L/D≤70. Under this ratio, a moderately long cell 100 can be obtained, and the rigidity of the cell 100 is large enough, thereby facilitating the processing, transportation, and assembly. When the cell 100 is mounted in the battery pack housing, because the cell 100 has high rigidity, the cell 100 itself can be used as reinforcing beams. On the other hand, while ensuring that the length of the cell 100 extends along the first direction, a suitable resistance, a large heat dissipation area, and high heat dissipation efficiency can be maintained, providing good adaptability for various vehicle types.

According to the battery pack 200 provided by this application, in the X direction, the battery pack 200 further includes two side plate components disposed opposite to each other on two sides of the cell array 3 and configured to sandwich the cell array 3. The side plate components sandwiching the cell array 3 provide a function of limiting expansive deformation of the plurality of cells 100, thereby ensuring starting of an explosion-proof valve 103 and a current interrupt device (CID). Specifically, in some embodiments, as shown in FIG. 4, the side plate components may be a third side beam 203 and a fourth side beam 204. In some other embodiments, as shown in FIG. 12, the side plate components may be a first side plate 209 and a second side plate 210.

The battery pack provided by this application further includes a sealing cover 220. The sealing cover 220 and the support member 4 form an accommodating cavity for accommodating the cell array 3. The sealing cover 220 and the support member 4 define the accommodating cavity for accommodating cells, and the sealing cover 220 provides a waterproof moisture-proof function.

The battery pack 200 includes a tray for use with a vehicle. The tray is a separately fabricated tray for accommodating and mounting cells 100 therein. As shown in FIG. 16, FIG. 18, and FIG. 19, after the cell 100 is mounted in the tray, the tray may be mounted on the vehicle body through a fastener, for example, may be suspended on the chassis of an electric vehicle.

The tray includes a first side beam 201 and a second side beam 202 disposed opposite to each other along the Y direction, the support member 4 is the first side beam 201 and the second side beam 202, the first end of the cell 100 is supported by the first side beam 201, and the second end of the cell 100 is supported by the second side beam 202. Under the technical concept of this application, the specific structure of the first side beam 201 and the second side beam 202 are not limited, the first side beam 201 and the second side beam 202 are disposed opposite to each other, and the first side beam 201 and the second side beam 202 may be parallel to each other or may form an angle, and may be of a straight or curved structure. The first side beam 201 may be rectangular, cylindrical, or polygonal, which is not particularly limited in this application.

The first side beam 201 and the second side beam 202 are disposed opposite to each other along the Y direction, the plurality of cells 100 are disposed between the first side beam 201 and the second side beam 202, and two ends of the cell 100 are respectively supported by the first side beam 201 and the second side beam 202. In an embodiment, the first end of each cell 100 is supported by the first side beam 201, and the second end of each cell 100 is supported by the second side beam 202.

In other words, each of the cells 100 extends between the first side beam 201 and the second side beam 202, and the plurality of cells 100 are arranged along the length direction of the first side beam 201 and the second side beam 202, that is, arranged along the X direction.

The first end and the second end of the cell 100 are respectively supported by the first side beam 201 and the second side beam 202. The cell 100 may be directly supported by the first side beam 201 and the second side beam 202, that is, respectively placed on the first side beam 201 and the second side beam 202; or may be fixed on the first side beam 201 and the second side beam 202. The specific fixing manner will be described in detail below. The specific supporting and fixing manners are not limited in this application.

In some embodiments of this application, the first end of each cell 100 may be directly or indirectly supported by the first side beam 201, and the second end of each cell 100 may be directly or indirectly supported by the second side beam 202. The term "directly" means that the first end of the cell 100 is in direct contact fit with the first side beam 201, and the second end of the cell 100 is in direct contact fit with the second side beam 202. The term "indirectly" means that for example, in some embodiments, the first end of the cell 100 is supported by the first side beam 201 through a first end plate 207, and the second end of the cell 100 is supported by the second side beam 202 through a second end plate 208.

It should be noted that the cell 100 may be perpendicular to the first side beam 201 and/or the second side beam 202, or may form a sharp or obtuse angle with the first side beam 201 and/or the second side beam 202. For example, when the first side beam 201 and the second side beam 202 are parallel to each other, the first side beam 201, the second side beam 202, and the cell 100 may constitute a rectangular, square or rhomboid, fan-shaped or other structure; when the first side beam 201 and the second side beam 202 form an angle, the first side beam 201, the second side beam 202, and the cell 100 may constitute a trapezoid, triangular or other structure. The angle between the first side beam 201 and the second side beam 202 and the angles between the cell 100 and the first side beam 201 and the second side beam 202 are not limited in this application.

The first side beam 201 and the second side beam 202 are located on two opposite sides of the tray along the Y direction, which means that as shown in FIG. 2, the first side beam 201 and the second side beam 202 are located on the outermost sides of the tray along the Y direction, and the first side beam 201 and the second side beam 202 are the outermost side edges of the tray.

Moreover, the "first end" and the "second end" of the cell 100 mentioned above are used for describing the orientation of the cell 100, and are not intended to limit or describe the specific structure of the cell 100. For example, the "first end" and the "second end" of the cell 100 are not intended to limit or describe positive and negative electrodes of the cell 100. In other words, in this application, the end of the cell 100 supported by the first side beam 201 is the first end, and and the end of the cell 100 supported by the second side beam 202 is the second end.

The vehicle body has a large width of for example 1.2 m-2 m and a large length of for example 2 m-5 m, and different vehicle types correspond to different vehicle body widths and lengths. A larger vehicle body width and length requires the tray disposed at the bottom of the vehicle to have a larger overall dimension. However, a large tray dimension results in that in the related art, in addition to the side beams disposed at the side edges of the tray, transverse beams also need to be disposed inside the tray, in order to provide a sufficient supporting force and structural strength for cells disposed therein. After transverse beams are disposed in the tray, part of the load and internal space of the tray are occupied by the transverse beams; as a result, the space inside the tray cannot be effectively used. In addition, due to the existence of transverse beams, to allow for the mounting of transverse beams, a plurality of battery modules need to be disposed inside the tray along the width and length directions, which requires a complex mounting process involving a large quantity of mechanical members for mounting.

However, if transverse beams are removed, the module layout and cell layout methods in the related art cannot provide a sufficient structural strength for the battery module, and the tray cannot provide a sufficient bearing capacity.

In this application, when the length L of the cell is 600 mm-1500 mm, two ends of the cell 100 are respectively supported by the first side beam 201 and the second side beam 202, so as to distribute the weight of the cell to the side beams on two sides of the tray. While avoiding the use of transverse beams, the bearing capacity of the tray is effectively improved. In addition, the cell 100 itself can provide a supporting function.

The first side beam 201 and the second side beam 202 respectively include inner wall surfaces matching two end faces of the cell 100. An insulating plate is sandwiched between the inner wall surface of the first side beam 201 and the first end of the cell 100, that is, the insulating plate is located between the cell 100 and the inner wall surface of the first side beam 201. An insulating plate is sandwiched between the inner wall surface of the second side beam 202 and the second end of the cell 100, that is, the insulating plate is located between the cell 100 and the inner wall surface of the second side beam 202. Specifically, the specific structure of the insulating plate is not limited, as long as it can provide functions of fixing the cell array 3 and preventing expansion. In some implementations, the insulating plate may be a first end plate 207 and a second end plate 208 described below.
the tray includes a bottom plate, the first side beam 201 and the second side beam 202 are disposed opposite to each other at two ends of the bottom plate along the Y direction, and the cell 100 is spaced apart from the bottom plate. In this way, the bearing load of the bottom plate for the cell 100 can be reduced, and most of the weight of the cell 100 can be borne by the first side beam and the second side beam, so that the load bearing requirements on the bottom plate are lowered, thereby simplifying the manufacturing process of the bottom plate and reducing the production costs.

A thermal insulation layer 217 is disposed between the bottom of the cell array 3 formed by arranging a plurality of cells 100 and the bottom plate of the tray, so as to prevent the heat transfer between the cell 100 and the outside, thereby achieving a heat preservation function for the cell 100, and preventing thermal interference between the environment outside the battery pack 200 and the cell 100 inside the battery pack 200. The thermal insulation layer 217 may be made of a material having heat insulation and heat preservation functions, for example, made of heat preservation cotton.

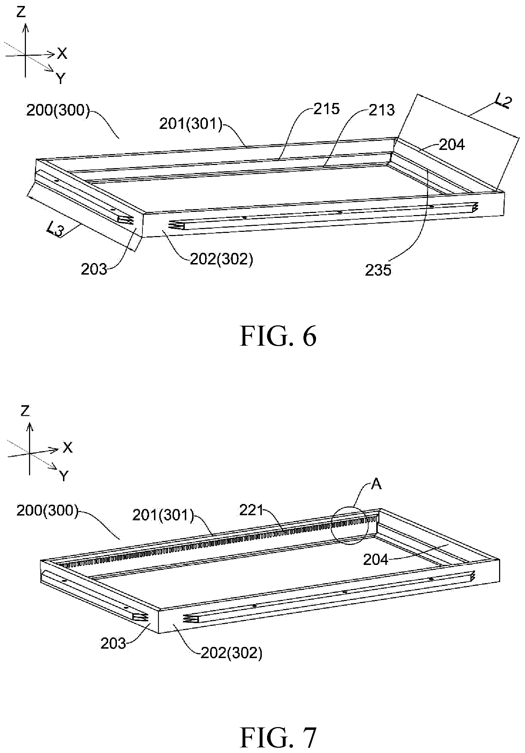

Moreover, to enable the first side beam 201 and the second side beam 202 to provide a supporting force for the cell 100, in an implementation provided in this application, as shown in FIG. 5 and FIG. 6, the first side beam 201 is provided with a first support plate 213, and the second side beam 202 is provided with a second support plate 214. A side of the first support plate 213 facing toward the sealing cover 220 is provided with a first supporting surface, and a side of the second support plate 214 facing toward the sealing cover 220 is provided with a second supporting surface. The first end of each cell 100 is supported by the first supporting surface of the first support plate 213, and the second end of each cell 100 is supported by the second supporting surface of the second support plate 214. A side of the first support plate 213 facing away from the sealing cover 220 is provided with a first mounting surface, and a side of the second support plate 214 facing away from the sealing cover 220 is provided with a second mounting surface. The bottom plate of the tray is mounted on the first mounting surface and the second mounting surface, the first support plate 213 may protrude inward from the bottom of the first side beam 201, and the second support plate 214 may protrude inward from the bottom of the second side beam 202.

Compared with technical solution in the related art where the bottom plate in the battery pack is used to support the cell 100, in this application, by using the first support plate 213 and the second support plate 214 disposed on the first side beam 201 and the second side beam 202 to support the cell 100, the structure of the battery pack 200 provided by this application can be simplified, and the weight of the battery pack 200 can be reduced. Insulating plates may be disposed on the first support plate 213 and the second support plate 214. The insulating plates are located between the cell 100 and the first support plate 213 and the second support plate 214.

The manner of connection between the first side beam 201, the second side beam 202, and the bottom plate is not particularly limited, and they may be integrally formed or may be welded together.

The inner wall surface of the first side beam 201 facing toward the cell 100 has a first connecting surface 215, and a distance from the first connecting surface 215 to the sealing cover 220 is less than a distance from the first supporting surface to the sealing cover 220; the inner wall surface of the second side beam 202 facing toward the cell 100 has a second connecting surface 216, and a distance from the second connecting surface 216 to the sealing cover 220 is less than a distance from the second supporting surface to the sealing cover 220; and the two ends of the cell 100 are respectively in contact with the first connecting surface and the second connecting surface.

In some embodiments, the first side beam 201 is further provided with a first connecting surface 215, and the second side beam 202 is further provided with a second connecting surface 216. The first end of each cell 100 is fixed on the first connecting surface 215, and the second end of each cell 100 is fixed on the second connecting surface 216. The first connecting surface 215 may be a third support plate disposed on the first side beam 201, and the third support plate is located above the first support plate 213. The second connecting surface 216 may be a fourth support plate disposed on the second side beam 202, and the fourth support plate is located above the second support plate 214. The first end and the second end of the cell may be fixed to the first connecting surface 215 and the second connecting surface 216 through fasteners, or welded on the first connecting surface 215 and the second connecting surface 216.

In practice, the inner wall surface of the first side beam 201 facing toward the cell 100 has a step structure including at least two steps, and sides of two steps facing toward the sealing cover 220 respectively form the first connecting surface 215 and the first supporting surface; and the inner wall surface of the second side beam 202 facing toward the cell 100 has a step structure including at least two steps, and sides of two steps facing toward the sealing cover 220 respectively form the second connecting surface 216 and the second supporting surface.

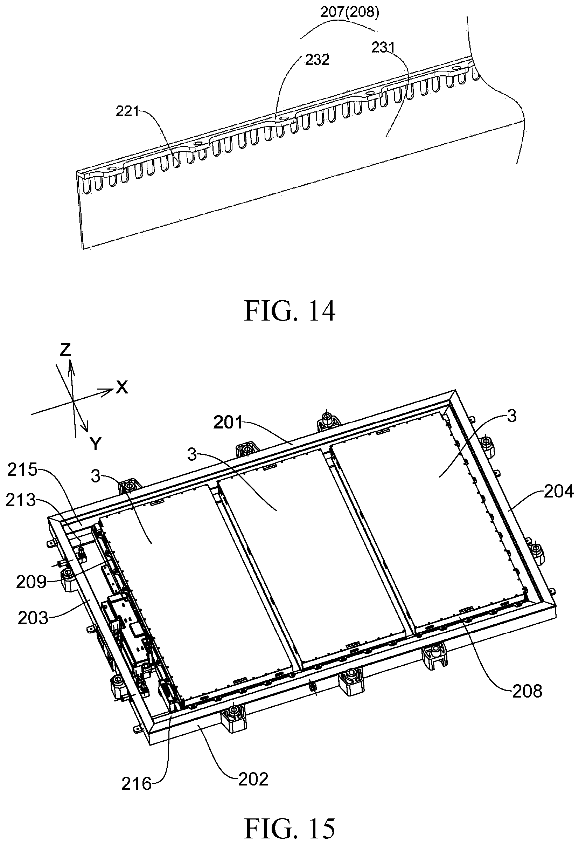

According to the battery pack provided by this application, in at least a part of the plurality of cells 100, as shown in FIG. 12 and FIG. 14, a first end plate 207 is disposed at an end of a cell 100 adjacent to the first side beam 201 facing toward the first side beam 201; in at least a part of the plurality of cells 100, a second end plate 208 is disposed at an end of a cell 100 adjacent to the second side beam 202 facing toward the second side beam 202. The first end of the at least one cell 100 is connected to the first connecting surface 215 through the first end plate 207, and the second end of the at least one cell 100 is connected to the second connecting surface 216 through the second end plate 208. In other words, only one cell is supported by the first side beam 201 through the first end plate, and at least one cell 100 is supported by the second side beam 202 through the second end plate 208. The first end plate 207, the second end plate 208, and at least a part of the plurality of cells 100 form a battery module. There may be one first end plate 207, there may be one second end plate 208, and the first end plate 207, the second end plate 208, and a plurality of cells 100 form a battery module. The battery module is supported between the first side beam 201 and the second side beam 202 through the first end plate 207 and the second end plate 208. There may be a plurality of first end plates 207, there may be a plurality of second end plates 208, and the plurality of first end plates 207, the plurality of second end plates 208, and the cells 100 form a plurality of battery modules. Each of the battery modules is supported between the first side beam 201 and the second side beam 202 through the corresponding first end plate 207 and second end plate 208. Each of the battery modules extends between the first side beam 201 and the second side beam 202, and the plurality of battery modules are arranged along the length direction of the first side beam 201 and the second side beam 202. In this application, the quantity of first end plates 207 and the quantity of second end plates 208, that is, the quantity of battery modules is not limited.

In some embodiments, the first end plate 207 includes an end plate body 231 disposed opposite to an end face of the cell 100 and a first connecting plate 232 connected to the end plate body 231 and protruding toward the first side beam 201, the second end plate 208 includes an end plate body 231 disposed opposite to an end face of the cell 100 and a first connecting plate 232 connected to the end plate body 231 and protruding toward the second side beam 202, the first connecting plate 232 of the first end plate 207 is connected to the first connecting surface 215, and the first connecting plate 232 of the second end plate 208 is connected to the second connecting surface 216. The specific connection form is not limited herein.

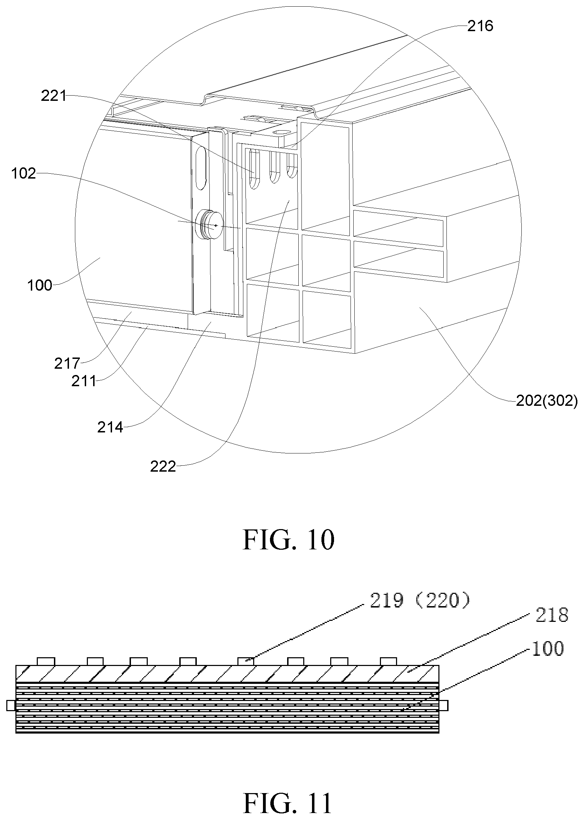

In an implementation, as shown in FIG. 2 and FIG. 10, an explosion-proof valve 103 is disposed at the first end of the cell 100 facing toward the first side beam 201, the first side beam 201 is provided therein with an exhaust passage 222, an exhaust vent 221 is provided at a position on the first side beam 201 corresponding to the explosion-proof valve 103, the exhaust vent 221 is in communication with the exhaust passage 222, and the battery pack 200 is provided with an exhaust outlet in communication with the exhaust passages 222. An explosion-proof valve 103 is disposed at the second end of the cell 100 facing toward the second side beam 202, the second side beam 202 is provided therein with an exhaust passage 222, an exhaust vent 221 is provided at a position on the second side beam 202 corresponding to the explosion-proof valve 103, the exhaust vent 221 is in communication with the exhaust passage 222, and the battery pack 200 is provided with an exhaust outlet in communication with the exhaust passages 222. In other implementations, as shown in FIG. 12 and FIG. 14, the exhaust vent 221 may be formed on the first end plate 207 and the first side beam 201, and/or on the second end plate 208 and the second side beam 202.

In the related art, during the use of the battery pack, if gas pressure inside the cell increases to a certain degree, the explosion-proof valve is opened, so that a flame, smoke or gas inside the cell will be discharged through the explosion-proof valve. The flame, smoke or gas accumulates inside the battery pack, and if not discharged in time, will cause secondary damage to the cell. In this application, because the gas inlet 221 corresponding to the explosion-proof valve 103 of the cell 100 is provided on the first side beam 201 and/or the second side beam 202 and the first side beam 201 and/or the second side beam 202 is provided therein with the exhaust passage 222, the explosion-proof valve 103 is opened when the gas pressure inside the cell 100 increases, and the flame, smoke or gas inside the cell will directly enter the exhaust passages 222 inside the first side beam 201 and/or the second side beam 202 through the gas inlet 221, and will be discharged out of the first side beam 201 and the second side beam 202 through the exhaust vent, for example, discharged into the atmosphere through the exhaust vent. In this way, the flame, smoke or gas will not accumulate inside the battery pack 200, thereby preventing the the flame, smoke or gas from causing secondary damage to the cell 100.

In some embodiments, a management accommodating cavity for accommodating battery management components and power distribution components is defined between the first connecting surface 215, the second connecting surface 216, and the sealing cover 220. In this way, the space occupied by battery management components and power distribution components can be reduced, so that more cells can be disposed in the battery pack, thereby improving the space utilization, and improving the volume energy density and the battery life.

For the bottom plate of the tray, the cell 100 is spaced apart from the bottom plate of the tray. Because the bottom plate of the tray does not receive any force, the manufacturing process of the bottom plate can be simplified, thereby reducing the manufacturing costs. A thermal insulation layer is disposed between the cell 100 and the bottom plate of the tray, to prevent heat transfer between the cell 100 and the outside, thereby achieving a heat preservation function for the cell 100, and preventing thermal interference between the environment outside the battery pack 200 and the cell 100 inside the battery pack 200. The thermal insulation layer may be made of a material having heat insulation and heat preservation functions, for example, made of heat preservation cotton.

Moreover, in an implementation provided in this application, as shown in FIG. 3 to FIG. 8, the battery pack 200 further includes a third side beam 203 and a fourth side beam 204 disposed opposite to each other along the X direction, and the plurality of cells 100 are arranged between the third side beam 203 and the fourth side beam 204 along the X direction. In an implementation, the first side beam 201 and the second side beam 202 are perpendicular to and connected to the third side beam 203 and the fourth side beam 204, so that the battery pack 200 forms a rectangle or square. In other implementations, the first side beam 201 and the second side beam 202 may be parallel to each other, and the third side beam 203 and the fourth side beam 204 may form an angle with the first side beam 201 and the side beam 202, so that the battery pack 200 forms a trapezoid, rhomboid, or the like. The specific shape of the battery pack 200 formed by the first side beam 201, the second side beam 202, the third side beam 203, and the fourth side beam 204 is not limited in this application.

In some embodiments, as shown in FIG. 2, the third side beam 203 and the fourth side beam 204 provide a pressing force to the cell array 3. The third side beam 203 applies an acting force, which is toward the fourth side beam 204, on the cell 100 disposed adjacent to the third side beam 203, and the third side beam 204 applies an acting force, which is toward the third side beam 203, on the cell 100 disposed adjacent to the fourth side beam 204, so that the plurality of cells 100 can be closely arranged between the third side beam 203 and the fourth side beam 204 along the X direction, and the plurality of cells 100 can closely fit each other. Moreover, the third side beam 203 and the fourth side beam 204 may limit the plurality of cells 100 in the X direction, and especially when the cell 100 undergoes slight expansion, may provide a buffering function and an inward pressure for the cell 100, to prevent the cell 100 from excessive expansion and deformation. Especially when the cell 100 is provided with the explosion-proof valve 103 and a current interrupt device (CID), the third side beam 203 and the fourth side beam 204 can effectively limit the expansion of the cell 100, so that when the cell 100 fails and expands, the gas pressure inside the cell is sufficient to break through the explosion-proof valve 103 or a flip sheet inside the CID, to short circuit the cell 100, thereby ensuring the safety of the cell 100, and preventing explosion of the cell 100.

As shown in FIG. 12 and FIG. 13, a first elastic apparatus 205 may be disposed between the third side beam 203 and the cell 100 adjacent to the third side beam 203, and/or a second elastic apparatus 206 may be disposed between the fourth side beam 204 and the cell 100 adjacent to the fourth side beam 204. The first elastic apparatus 205 may be mounted on the third side beam 203, the second elastic apparatus 206 may be mounted on the fourth side beam 204, and the plurality of cells 100 are closely arranged through the first elastic apparatus 205 and the second elastic apparatus 206. In this way, he quantity of cells 100 arranged between the third side beam 203 and the fourth side beam 204 can be adjusted by changing the mounting distances from the first elastic apparatus 205 and the second elastic apparatus 206 to the third side beam 203 and the fourth side beam 204 without changing the spacing between the third side beam 203 and the fourth side beam 204.

In some embodiments, the third side beam 203 is further provided with a third connecting surface 236, and the fourth side beam 204 is further provided with a fourth connecting surface 235. A first side of each cell 100 is fixed on the third connecting surface 236, and a second side of each cell 100 is fixed on the fourth connecting surface 235.

In at least a part of the plurality of cells 100, as shown in FIG. 12 and FIG. 13, a first side plate 209 is disposed at an end of a cell 100 adjacent to the third side beam 203 facing toward the third side beam 203; in at least a part of the plurality of cells 100, a second side plate 210 is disposed at an end of a cell 100 adjacent to the fourth side beam 204 facing toward the fourth side beam 204.

The first side of the at least one cell 100 is connected to the third connecting surface 236 through the first side plate 209, and the second side of the at least one cell 100 is connected to the fourth connecting surface 235 through the second side plate 210. In other words, at least one cell is supported by the fourth side beam 204 through the first side plate 209, and at least one cell 100 is supported by the fourth side beam 204 through the second side plate 210. The first side plate 209, the second side plate 210, and at least a part of the plurality of cells 100 form a battery module. There may be one first side plate 209, there may be one second side plate 210, and the first side plate 209, the second side plate 210, and a plurality of cells 100 form a battery module. The battery module is supported between the third side beam 203 and the fourth side beam 204 through the first side plate 209 and the second side plate 210. There may be a plurality of first side plates 209, there may be a plurality of second side plates 210, and the plurality of first side plates 209, the plurality of second side plates 210, and the cells 100 form a plurality of battery modules. Each of the battery modules is supported between the third side beam 203 and the fourth side beam 204 through the corresponding first side plate 209 and second side plate 210. Each of the battery modules is arranged between the third side beam 203 and the fourth side beam 204. In this application, the quantity of first side plates 209 and the quantity of second side plates 210, that is, the quantity of battery modules is not limited.

In some embodiments, the first side plate 209 includes a side plate body 234 disposed opposite to an end face of the cell 100 and a second connecting plate 233 connected to the side plate body 234 and protruding toward the third side beam 203, the second side plate 210 includes a side plate body 234 disposed opposite to an end face of the cell 100 and a second connecting plate 233 connected to the side plate body 234 and protruding toward the fourth side beam 204, the second connecting plate 233 corresponding to the first side plate 209 is connected to the third connecting surface 236, and the second connecting plate 233 of the second side plate 210 is connected to the fourth connecting surface 235. The specific connection form is not limited herein.

In some embodiments, at least a part of the cells 100 are supported between the first side beam 201 and the second side beam 202 through a second panel 211, and the second panel 211 and at least a part of the cells 100 form a battery module. In other words, the second panel 211 is disposed below at least a part of the plurality of cells 100, and each cell 100 is supported between the first side beam 201 and the second side beam 202 through the second panel 211; and the second panel 211 and at least a part of the plurality of cells 100 form a battery module. In this implementation, the plurality of cells 100 are supported between the first side beam 201 and the second side beam 202 through the second panel 211, thereby simplifying the structure of the battery module, and achieving a lightweight battery pack.

The first end plate 207 and the second end plate 208, or the second panel 211 may be supported by the first side beam 201 and the second side beam 202 in various manners, which are not limited in this application. For example, the first end plate 207 and the second end plate 208, or the second panel 211 may be detachably fastened on the first side beam 201 and the second side beam 202 through fasteners; or fixed to the first side beam 201 and the second side beam 202 by welding; or connected to the first side beam 201 and the second side beam 202 by gluing; or directly placed on the first side beam 201 and the second side beam 202, and supported by the first side beam 201 and the second side beam 202.

In an implementation, the battery pack 200 includes: a first panel 212 and a second panel 211, where the first panel 212 and the second panel 211 are respectively connected to upper surfaces and lower surfaces of at least a part of the cells 100; a first end plate 207 and a second end plate 208, where the first end plate 207 and the second end plate 208 are respectively provided on two end faces of at least a part of the cells 100; and a first side plate 209 and a second side plate 210, where the first side plate 209 and the second side plate 210 are respectively disposed on outer side surfaces of the outermost two cells 100. The first end plate 207, the second end plate 208, the first side plate 209, and the second side plate 210 are all connected to the first panel 212 and the second panel 211. The inner wall surface of the first side beam 201 facing toward the cell 100 has a first supporting surface and a first connecting surface 215, and the inner wall surface of the second side beam 202 facing toward the cell 100 has a second supporting surface and a second connecting surface 216. The first end of the cell 100 is supported by the first supporting surface, and the second end of the cell 100 is supported by the second supporting surface. The first end plate 207 is connected to the first connecting surface 215, and the second end plate 208 is connected to the second connecting surface 216. An inner wall surface of the third side beam 203 facing toward the cell 100 has a third connecting surface 236, and an inner wall surface of the fourth side beam facing toward the cell has a fourth connecting surface 235. The first side plate 209 is connected to the third connecting surface 236, and the second side plate 210 is connected to the fourth connecting surface 235.

Through the above implementation, the first end plate 207, the second end plate 208, the first side plate 209, the second side plate 210, the first panel 212, and the second panel 211 jointly define a closed accommodating space for accommodating the plurality of cells 100. In this way, when the cell 100 fails and bums or explodes, the first end plate 207, the second end plate 208, the first side plate 209, the second side plate 210, the first panel 212, and the second panel 211 can control the impact of the failure of the cell 100 to be within a certain range, so as to prevent the explosion of the cell 100 from affecting components nearby. The first side plate 209 may be the first elastic apparatus 205 mentioned above, and the second side plate 210 may be the second elastic apparatus 206 mentioned above, so that the first side plate 209 and the second side plate 210 provide a function of limiting expansive deformation of the plurality of cells 100, thereby ensuring starting of the explosion-proof valve 103 and/or the current interrupt device (CID).

For embodiments where the battery module includes the first panel 212, as shown in FIG. 11, a heat-conducting plate 218 may be disposed between the first panel 212 and the cell 100, to facilitate heat dissipation of the cell 100, and ensure that the temperature difference between the plurality of cells 100 is not too large. The heat-conducting plate 218 may be made of a material having a good heat-conducting property. For example, the heat-conducting plate 218 may be made of a material having a high coefficient of thermal conductivity, such as copper or aluminum.

In some embodiments, when the battery pack is used on a vehicle to provide electric energy, the length direction of the cell 100 may be used as the width direction of the vehicle, that is, a left-right direction of the vehicle.

In another implementation provided in this application, the support member 4 is a plurality of bottom beams, and the bottom beams are located below the cell array 3. The bottom beams are used for supporting the cell array 3. Upper surfaces of the bottom beams may be planes so as to support the cell array 3 in a surface-to-surface manner. In practice, the bottom beam has a rectangular cross-section. There may be a plurality of bottom beams, and the plurality of bottom beams may be disposed in parallel at intervals or disposed crossing each other. The cell array 3 may be fixed to the bottom beams by means such as gluing or threaded connecting members, the battery pack further includes a sealing cover, and the sealing cover and the bottom beams form an accommodating cavity for accommodating the cell array 3. The sealing cover is used for preventing intrusion of dust, water, and the like.
as shown in FIG. 25, the bottom beams include a first beam 501 and a second beam 502 located on and intersecting the first beam 501, an angle between an extension direction of the first beam 501 and the Y direction is 60-90°, and the cell 100 is supported by the first beam 501. In the embodiment shown in FIG. 25, the first beam 501 is perpendicularly connected to the second beam 502. The connection between the first beam 501 and the second beam 502 may be achieved by means such as, but not limited to, a threaded connecting member or welding. The first beam 501 and the second beam 502 may both be straight beams.

In practice, there are two second beams 502, the two second beams 502 are respectively located at two ends of the first beam 501 and are respectively perpendicular to the first beam 501, and the cell 100 is supported by the first beam 501. The second beam 502 protrudes upward (Z direction) relative to the first beam 501, for example, a lower surface of the second beam 502 may be connected to an upper surface of the first beam 501. During the arrangement of the cells 100, the outermost two cells 100 may respectively lean against side surfaces of two second beams 502 which face toward each other. A center of the cell 100 is located on the first beam 501. A length direction of the cell 100 is perpendicular to a length direction of the first beam 501. By aligning the center of the cell 100 with the first beam 501, the supporting of the cell 100 by using a single beam can be achieved. Certainly, in other embodiments, there may also be a plurality of first beams 501, and the plurality of first beams 501 are parallel to and spaced apart from each other along a second direction.

In other implementations, the bottom beams may be a plurality of rectangular beams parallel to and spaced apart from each other, an angle between an extension direction of the rectangular beam and the Y direction is 60-90°, and the cell 100 is supported by the rectangular beam. The rectangular beam may be evenly distributed along the Y direction, the extension direction of the rectangular beam is perpendicular to the Y direction, and the cell 100 is located on the evenly distributed rectangular beam.

Certainly, the shape of the bottom beam includes, but is not limited to, straight and rectangular, and may also be triangular, trapezoidal, or any other special shape.

In another implementation provided in this application, as shown in FIG. 16, the support member 4 is a vehicle chassis, and the cell array 3 is located on the vehicle chassis. The battery pack 200 may be directly formed on an electric vehicle. In other words, the battery pack 200 is an apparatus configured for mounting the cell 100 and formed at any suitable position on the electric vehicle. for example, the battery pack 200 may be directly formed on the chassis of the electric vehicle.

In some embodiments, the vehicle chassis is provided with a cavity 300 recessed downward, to facilitate the assembly of the cell 100.

In a specific implementation provided in this application, the cavity 300 may include a first side wall 301 and a second side wall 302 disposed opposite to each other. The first side wall 301 may extend downward from the chassis of the electric vehicle to obtain an extension portion of the first side wall 301, and the second side wall 302 may extend downward from the chassis of the electric vehicle to obtain an extension portion of the first side wall 302. In this way, as an implementation, the first end of the cell 100 may be supported by the extension portion of the first side wall 301, and the second end of the cell 100 may be supported by the extension portion of the second side wall 302. Accordingly, this application further provides an electric vehicle allowing for arranging cells 100 according to the above technical solution, where a cavity 300 having the same features as a separate tray for use with a vehicle is formed on the electric vehicle, thus forming the battery pack 200 provided by this application.

In some embodiments, in an exemplary implementation provided in this application, the extension portion of the first side wall 301 and the extension portion of the second side wall 302 form a bottom 305 of the cavity 300. In an implementation, the extension portion of the first side wall 301 is connected to the extension portion of the second side wall 302, so that the cavity 300 is formed into a cavity 300 having a U-shaped groove recessed downward, and the cell 100 may be supported by th bottom 305 of the cavity 300. In another implementation, the extension portion of the first side wall 301 may be spaced apart from the extension portion of the second side wall 302 by a distance.

According to the battery pack 200 provided by this application, as shown in FIG. 2, a cell placement region is formed in the battery pack 200, the cell array 3 is located in the cell placement region, and the battery pack 200 includes one cell array 3.

In other words, no reinforcing rib needs to be disposed in the battery pack, and the cells 100 connected function as reinforcing ribs, so that the structure of the battery pack 200 is greatly simplified, and the space occupied by reinforcing ribs and the space occupied by the mounting structure of the cell 100 are reduced, thereby improving the space utilization to improve the battery life.

In some specific examples of this application, the battery pack accommodates only one cell 100 in the Y direction. In other words, in the Y direction, the battery pack 200 does not allow two or more cells 100 to be arranged in this direction. That the battery pack accommodates only one cell 100 means that in the Y direction of the battery pack 200, only one cell 100 can be disposed. As shown in FIG. 2 and FIG. 4 to FIG. 6, the cell 100 is perpendicular to the first side beam 201 and the second side beam 202, a distance between the first end and the second end of the cell 100 is L1, and a distance between an inner surface of the first side beam 201 and an inner surface of the second side beam 202 is L2, where a ratio of L1 to L2 meets L1/L2≥50%. In other words, along the Y direction, only one cell 100 is arranged between the first side beam 201 and the second side beam 202. By means of such a setting of the cell 100 and the distance between the two side beams in the Y direction, the purpose of using the cell 100 as a transverse beam or longitudinal beam is achieved. In an exemplary implementation provided in this application, by arranging only one cell 100 between the first side beam 201 and the second side beam 202 along the Y direction, the cell 100 itself can serve as a transverse beam or longitudinal beam to enhance the structural strength of the battery pack 200.

In some embodiments, the ratio of L1 to L2 may meet 80%≤L1/L2≤97%, so that the first end and the second end of the cell 100 are as close as possible to the first side beam 201 and the second side beam 202 or even abut against the first side beam 201 and the second side beam 202. In this way, the distribution and transmission of force can be achieved by using the structure of the cell 100 itself, thereby ensuring that the cell 100 can serve as a transverse beam or longitudinal beam to enhance the structural strength of the battery pack 200, and ensuring that the battery pack 200 has sufficient strength against deformation under an external force.

Certainly, the embodiments of this application are not limited to the case where no reinforcing rib is disposed. Therefore, there may be a plurality of cell arrays 3.

According to the battery pack 200 provided by this application, a cell placement region is formed in the battery pack 200, the cell array 3 is located in the cell placement region, N cell arrays 3 along the X direction and M cell arrays 3 along the Y direction are disposed in the cell placement region, the cell arrays 3 are electrically connected to each other through connecting members between electrode terminals of cells, N is greater than or equal to 1, and M is greater than or equal to 1. An electrode terminal of the last cell of the (N-1)^{th} cell array 3 is connected to an electrode terminal of the first cell of the N^{th} cell array 3 through a connecting member, and N is greater than or equal to 1. In other words, in the battery pack, a plurality of cell arrays 3 may be disposed along the arrangement direction of the cells 100, that is, the battery pack 200 is provided therein with multiple columns of cell arrays 3.

Specifically, as shown in FIG. 21, the first partition plate 700 divides the shown cell array 3 along the X direction of the battery pack 200 into two cell arrays 3. The last cell 100 of one cell array 3 is connected to the first cell of the other cell array 3 through a connecting member.

According to the battery pack 200 provided by this application, a cell placement region is formed in the battery pack, the cell array 3 is located in the cell placement region, M cell arrays 3 along the Y direction are disposed in the cell placement region, the cell arrays 3 are electrically connected to each other through connecting members between electrode terminals of cells, and M is greater than or equal to 1. An electrode terminal of the last cell of the (M-1)^{th} cell array 3 is connected to an electrode terminal of the first cell of the M^{th} cell array 3 through a connecting member, and M is greater than or equal to 1. In other words, in the extension direction of the cell 100, a plurality of cells 100 may be accommodated. That is, the battery pack 200 is provided therein with multiple rows of cell arrays 3.

Specifically, as shown in FIG. 20, the second partition plate 800 divides the cell array 3 along the Y direction of the battery pack 2000 into two cell arrays 3. The last cell 100 of one cell array 3 is connected to the first cell of the other cell array 3 through a connecting member.

According to the battery pack 200 provided by this application, a cell placement region is formed in the battery pack, the cell array 3 is located in the cell placement region, N cell arrays 3 along the X direction and M cell arrays 3 along the Y direction are disposed in the cell placement region, the cell arrays 3 are electrically connected to each other through connecting members between electrode terminals of cells, N is greater than or equal to 1, and M is greater than or equal to 1. In other words, in the X direction of the battery pack, the cell placement region is divided into a plurality of battery placement subregions, and in the extension direction of the cell 100, i.e., the Y direction, a plurality of cells 100 may be accommodated. That is, the battery pack 200 is provided therein with multiple rows and multiple columns of cell arrays 3.

Specifically, as shown in FIG. 22, a first partition plate 700 and a second partition plate 800 are disposed in the battery pack 200, and the first partition plate 700 and the second partition plate 800 divide a plurality of cells into two rows and two columns of cell arrays 3. Any two of the cell arrays 3 are connected to each other through connecting members between electrode terminals.

In the foregoing description, the first partition plate 700 and the second partition plate 800 may be reinforcing ribs, or may be heat insulation foam or other mechanical member, which is not limited in this application.

The quantity of cells 100 in the cell array 3 is not particularly limited in this application, and depending on different vehicle types and different power requirements, different numbers of cells 100 may be arranged. In some specific examples of this application, the quantity of cells in the cell array 3 is 60-200. In some other specific examples of this application, the quantity of cells in the cell array 3 is 80-150.

In the battery pack 200 provided by this application, the cells in the cell array 3 are connected by gluing. By connecting the cells 100 with each other by gluing, space can be saved, and the use of other mechanical members is reduced, thereby achieving a lightweight design, and improving the energy density and the production efficiency.

In an implementation, the first panel 212 is a heat exchange plate 219 provided therein with a cooling structure, and a cooling liquid is provided inside the heat exchange plate 219, so as to lower the temperature of the cell 100 by using the cooling liquid, making the cell 100 remain at a suitable operating temperature. Because the heat-conducting plate 218 is disposed between the heat exchange plate 219 and the cell 100, the temperature differences between various positions on the heat exchange plate 219 can be balanced by means of the heat-conducting plate 218 when the cooling liquid is used to cool the cell 100, thereby controlling the temperature difference between the plurality of cells 100 to be within 1°C.

The cell 100 may be of any suitable structure and shape. In an implementation provided in this application, as shown in FIG. 3, the cell body of the cell 100 is a prismatic cell having a square-shaped structure and has a length, a thickness, and a height in a range of the length to the thickness, each cell 100 is placed on its side, a length direction of the cell body of each cell 100 is a Y direction, a thickness direction thereof is an X direction, a height direction thereof is a Z direction, and neighboring two cells 100 are arranged in a large surface-to-large surface manner. In other words, the square shape has a length L in the length direction, a thickness D in the thickness direction perpendicular to the length direction, and a height H in the height direction. The height H is in a range of the length L to the thickness D. The cell 100 has large surfaces, narrow surfaces, and end faces. A long side of the large surface has the length L, and a short side of the large surface has the height H. A long side of the narrow surface has the length L, and a short side of the narrow surface has the thickness D. A long side of the end face has the height H, and a short side of the end face has the thickness D. That each cell 100 is placed on its side means that and two end faces of the cell 100 respectively face toward the first side beam 201 and the second side beam 202. The large surfaces of neighboring two cells 100 are opposite to each other, so that the cells 100 can be used in place of transverse beams, and provide a better effect and a higher strength. In other implementations, the cell 100 may be a cylindrical cell.

In the related art, how to design the shape and dimension of the cell 100 to achieve both a suitable battery capacity and a good heat dissipation effect has long been one of the problems to be solved in the battery field.
in an implementation provided in this application, the ratio of the length L and the thickness D of the cell body of the cell 100 meets 23≤L/D≤208. Under this ratio, a long and thin cell 100 can be obtained. In this way, while ensuring that the length of the cell 100 extends along the Y direction, a suitable resistance, a large heat dissipation area, and high heat dissipation efficiency can be maintained, providing good adaptability for various vehicle types.

In another implementation provided in this application, the ratio of the length L and the height H of the cell body of the cell 100 meets 4≤L/D≤21. In some embodiments, 9≤L/H≤13. This ratio may be achieved by the above long and thin cell 100 or through dimension adjustment. By controlling the ratio of the length L and the height H of the cell body of the cell 100, a sufficient heat dissipation area is provided while ensuring that the length of the cell 100 extends along the Y direction, thereby ensuring the heat dissipation effect of the cell 100.

**In** the related art, because the dimension L of the cell is small, the two ends of the cell cannot be directly supported by the side beams. During the assembly process, first, a plurality of cells need to be arranged to form a cell array 3. End plates and/or side plates are disposed outside the cell array 3. Usually, both end plates and side plates are disposed. The end plates and the side plates are fixed to define a space for accommodating the cell array 3. Thus, a battery module is formed. Then, the battery module is mounted in the battery pack, and at least one of transverse beams and longitudinal beams further needs to be disposed in the battery pack to facilitate the mounting of the battery module. Such an assembly process is complex, the defect rate in the assembly process of the battery pack is increased, and multiple assembly procedures lead to an increase in the possibility of loosening and unstable mounting of the battery pack, adversely affecting the quality of the battery pack and reducing the stability and reliability of the battery pack.

Compared with the related art, in this application, the dimension L of the cell is large, and the cell is a hard-case cell that can provide a supporting function by itself; therefore, in the process of assembling cells into a battery pack, first, a single cell 100 may be directly placed on its side into the tray, with the first end of the cell 100 being supported by the first side beam 201, and the other end of the cell 100 being supported by the second side beam 200. Then, other cells 100 are placed in sequence along the X direction of the battery pack to form a cell array 3, and then the fixing of the cell array 3 and the mounting of battery management components and power distribution components are implemented by using fasteners. The entire assembly process is relatively simple, it is not necessary to assemble cells into a battery module first and then mount the battery module into the battery pack, but instead, the cell array 3 can be directly formed in the battery pack, thereby reducing the labor and material costs, lowering the defect rate, and improving the stability and reliability of the battery pack.

Certainly, in this application, it is also feasible to assemble cells into a cell array 3 first and then mount the cell array 3 into the battery pack, and this implementation also falls within the technical scope of this application.

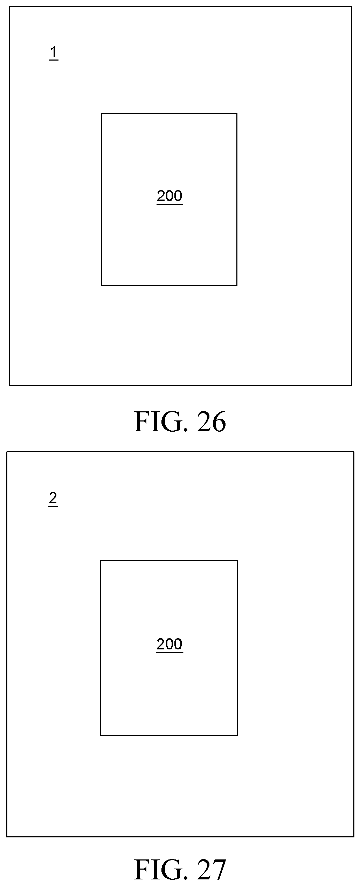

As shown in FIG. 26, a second objective of this application is to provide a vehicle 1, including the above-mentioned battery pack 200.

Herein, the vehicle 1 may include a commercial vehicle, a special vehicle, an electric bicycle, an electric motorcycle, an electric scooter, or any other electric vehicle that requires the use of a battery pack to provide electric energy to drive it.

In some embodiments, the battery pack 200 is disposed at a bottom of the electric vehicle, and the support member 4 is fixedly connected to a chassis of the vehicle 1. Because there is a large mounting space at the chassis of the electric vehicle, disposing the battery pack 200 at the chassis of the electric vehicle can increase the quantity of cells 100 as much as possible, thereby improving the battery life of the electric vehicle.

In some embodiments, the vehicle includes a battery pack disposed at a bottom of the vehicle, and the battery pack is fixedly connected to a chassis of the vehicle. The Q direction, or the length direction of the minimum enclosing rectangle of the cell, or the Y direction is a width direction of a vehicle body of the vehicle, that is, a left-right direction of the vehicle. The P direction, or the width direction of the minimum enclosing rectangle of the cell, or the Y direction is a length direction of the vehicle body of the vehicle, that is, a front-rear direction of the vehicle. In other implementations, the vehicle may include a plurality of battery packs disposed at the bottom of the vehicle. The shapes and dimensions of the plurality of battery packs may be the same or may be different. Each battery pack may be adjusted depending on the shape and dimension of the chassis of the vehicle. The plurality of battery packs are arranged along the length direction of the vehicle body, that is, the front-rear direction.

In some embodiments, in an implementation provided in this application, a ratio of a width L3 of the battery pack 200 in the Q direction, or the length direction of the minimum enclosing rectangle of the cell, or the Y direction to a vehicle body width W meets: 50%≤L3/W≤80%. In this implementation, only one battery pack 200 may be disposed along the width direction of the vehicle body, and when there are a plurality of battery packs 200, the plurality of battery packs 200 are arranged along the length direction of the vehicle body. Generally, for most vehicles, the vehicle body width is 600 mm-2000 mm, for example, 600 mm, 1600 mm, 1800 mm, or 2000 mm, and the vehicle body length is 500 mm-5000 mm. For a passenger vehicle, its width is generally 600 mm-1800 mm, and the vehicle body length is 600 mm-4000 mm.

In some embodiments, a ratio of a dimension L' of the cell 100 in the Q direction, or the length direction of the minimum enclosing rectangle of the cell, or the Y direction to the vehicle body width W meets: 46%≤L'/W≤76%. Taking the thicknesses of the first side beam 201 and the second side beam 202 of the battery pack 200 into consideration, when the ratio of the dimension L' of the cell 100 in the Y direction to the vehicle body width W meets 46%≤L'/W≤76%, in this implementation, only one cell 100 may be disposed along the width direction of the vehicle body. In other possible implementations, in the case that such a dimension requirement is satisfied, a plurality of battery modules or a plurality of cells may be disposed in the length direction. As an implementation, the dimension of the cell 100 in the Y direction is 600 mm-1500 mm.

It should be noted that in some embodiments of this application, although the solution where two ends of a cell are respectively supported by a first side beam and a second side beam has been proposed, in the actual production process, it is possible that cells having a length matching the vehicle body width cannot be fabricated, that is to say, due to some reasons, cells cannot be fabricated into an expected length. This is because that during the development of electric vehicles, according to the development requirements, a voltage platform of the entire battery pack is usually a fixed value, and the volume of the battery pack is a fixed value. Provided that the selected material system is certain, and the voltage platform of the cell is certain, the quantity of cells needed in the battery pack is certain. Because the volume of the battery pack is a fixed value, the volume of the cell is certain. As a result, if the length of the cell is increased, the thickness or width of the cell will be decreased. On the other hand, the surface area of the entire cell needs to be ensured in order to improve the heat dissipation effect, and in view of this, the length of the cell cannot be increased by reducing the width (height) of the cell. In addition, on the vehicle body, the utilization of the space in height is also limited. To minimize the impact, usually the width (height) of the cell is not adjusted. Therefore, the surface area of the cell can be changed only by changing the length of the cell in the first direction and the thickness of the cell in the second direction. Therefore, it is probable to increase the length by reducing the thickness. However, in practice, because a core and related material need to be placed inside the cell, the change in the thickness of the cell is limited to a minimum limit value. As a result, affected by the limit value of thickness variation, there is limited room for changing the length of the cell in the first direction, and the length of the cell cannot be increased indefinitely.

This application further provides an energy storage device 2.

As shown in FIG. 27, the energy storage device 2 of this application includes the battery pack 200 according to any one of the foregoing embodiments. The energy storage device 2 of this application may be applied to a backup power supply for family use, a backup power supply for commercial use, an outdoor power supply, peak-shaving energy storage equipment for a power station, a power supply for various vehicles, and the like.

The preferred embodiments of this application are described in detail above with reference to the accompanying drawings, but this application is not limited to the specific details in the above embodiments.

It should be noted that the specific technical features described in the above specific embodiments may be combined in any suitable manner without contradiction. To avoid unnecessary repetition, various possible combinations are not further described in this application.

In addition, the various embodiments of this application may be combined without departing from the idea of this application.

The improvement in energy density that is achieved in the battery pack 200 according to the embodiments of this application by designing the arrangement and dimension parameters of cells 100 will be described below with reference to Comparative Example 1 and Embodiments 1-2, Comparative Example 2 and Embodiments 3-4, as well as Comparative Example 3 and Embodiment 5.

The following embodiments and comparative examples all take a lithium iron phosphate battery as an example.

In Comparative Example 1, Embodiment 1, and Embodiment 2, the total volume of the battery pack 200 is 213 L, where the volume occupied by the battery pack housing and the battery management system and other power distribution modules therein is 82.54 L in total, and the remaining volume of the battery pack 200 that can be actually used for accommodating the cells 100 and/or the first partition plate and the second partition plate is 130.46 L. The battery pack housing has a length of 1380 mm, a width of 1005 mm, and a thickness of 137 mm, the volume of the power distribution box is 22.5 L, and the total volume of the battery pack is 213 L=1380×1005×137×0.000001+22.5.

### Comparative Example 1

For a battery pack 200 in the related art, as shown in FIG. 1, two transverse beams 500 and one longitudinal beam 600 are disposed inside the battery pack housing. The two transverse beams 500 and the longitudinal beam 600 divide cells 100 into six battery modules 400.

### Embodiment 1

For a battery pack 200 according to this embodiment of this application, as shown in FIG. 21, the length direction of the cell 100 is arranged along the width direction of the battery pack 200, and a plurality of cells 100 are arranged along the length direction of the battery pack 200. In the width direction of the battery pack 200, the battery pack housing accommodates one cell 100. The cell 100 extends from one side to the other side of the battery pack housing along the width direction of the battery pack 200. A first partition plate 700 is disposed in the battery pack housing, and no second partition plate 800 is disposed. The first partition plate 700 extends along the width direction of the battery pack 200. A plurality of cells 100 are arranged along the length direction of the battery pack 200 to form a cell array 400. The first partition plate 700 divides the cell array 400 along the length direction of the battery pack 200 into two parts. The first side beam 201 and the second side beam 202 of the battery pack housing that are located at two sides of the battery pack 200 in the width direction provide a supporting force for the cell 100. The third side beam 203 and the fourth side beam 204 of the battery pack housing that are located at two ends of the battery pack 200 in the length direction provide an inward pressing force for adjacent cells 100. The battery pack housing contains one layer of cell array 400 along the height direction of the battery pack 200.

### Embodiment 2

For a battery pack 200 according to this embodiment of this application, as shown in FIG. 23, the length direction of the cell 100 is arranged along the width direction of the battery pack 200, and a plurality of cells 100 are arranged along the length direction of the battery pack 200. In the width direction of the battery pack 200, the battery pack housing accommodates one cell 100. The cell 100 extends from one side to the other side of the battery pack housing along the width direction of the battery pack 200. no first partition plate 700 or second partition plate 800 is disposed in the battery pack housing. The first side beam 201 and the second side beam 202 of the battery pack housing that are located at two sides of the battery pack 200 in the width direction provide a supporting force for the cell 100. The third side beam 203 and the fourth side beam 204 of the battery pack housing that are located at two ends of the battery pack 200 in the length direction provide an inward pressing force for adjacent cells 100. The battery pack housing contains two layers of cell arrays 400 along the height direction of the battery pack 200.

It can be known by those skilled in the art by comparing the foregoing Comparative Example 1 and Embodiments 1-3 that compared with the battery pack 200 in the related art, the battery pack 200 according to the embodiments of this application, by designing the arrangement, dimension parameters and other factors of the cells 100, the grouping efficiency can overcome the limitations of existing battery packs 200, thereby achieving a higher energy density.

In Comparative Example 2, Embodiment 3, and Embodiment 4, the total volume of the battery pack 200 is 310 L, where the volume occupied by the battery pack housing and the battery management system and other power distribution modules therein is 90 L in total, and the remaining volume of the battery pack that can be actually used for accommodating the cells 100 and/or the first partition plate and the second partition plate is 220 L. The battery pack housing has a length of 1580 mm, a width of 1380 mm, and a thickness of 137 mm, the volume of the power distribution box is 11 L, and the total volume of the battery pack is 310 L=1580×1380×137×0.000001+11.

### Comparative Example 2

The arrangement manner of cells in the battery pack is the same as that in Comparative Example 1.

### Embodiment 3

For a battery pack 200 according to this embodiment of this application, as shown in FIG. 20, the length direction of the cell 100 is arranged along the length direction of the battery pack 200, and a plurality of cells 100 are arranged along the width direction of the battery pack 200. In the length direction of the battery pack 200, the battery pack housing accommodates one cell 100. The cell 100 extends from one side to the other side of the battery pack housing along the length direction of the battery pack 200. A second partition plate 800 is disposed in the battery pack housing, and no transverse beam 500 is disposed. The second partition plate 800 extends along the length direction of the battery pack 200. A plurality of cells 100 are arranged along the width direction of the battery pack 200 to form a cell array 400. The second partition plate 800 divides the cell array 400 along the width direction of the battery pack 200 into two parts. The third side beam 203 and the fourth side beam 204 of the battery pack housing that are located at two ends of the battery pack 200 in the length direction provide a supporting force for the cell 100. The first side beam 201 and the second side beam 202 of the battery pack housing that are located at two sides of the battery pack 200 in the width direction provide an inward pressing force for adjacent cells 100. The battery pack housing contains two layers of cell arrays 400 along the height direction of the battery pack 200.

### Embodiment 4

For a battery pack 200 according to this embodiment of this application, as shown in FIG. 24, the length direction of the cell 100 is arranged along the length direction of the battery pack 200, and a plurality of cells 100 are arranged along the width direction of the battery pack 200. In the length direction of the battery pack 200, the battery pack housing accommodates one cell 100. The cell 100 extends from one side to the other side of the battery pack housing along the length direction of the battery pack 200. The third side beam 203 and the fourth side beam 204 of the battery pack housing that are located at two ends of the battery pack 200 in the length direction provide a supporting force for the cell 100. The first side beam 201 and the second side beam 202 of the battery pack housing that are located at two sides of the battery pack 200 in the width direction provide an inward pressing force for adjacent cells 100. The battery pack housing contains two layers of cell arrays 400 along the height direction of the battery pack 200.

In Comparative Example 3 and Embodiment 5, the total volume of the battery pack 200 is 414 L, where the volume occupied by the battery pack housing and the battery management system and other power distribution modules therein is 102 L in total, and the remaining volume of the battery pack that can be actually used for accommodating the cells 100 is 312 L. The battery pack housing has a length of 2130 mm, a width of 1380 mm, and a thickness of 137 mm, the volume of the power distribution box is 11 L, and the total volume of the battery pack is 414 L=2130×1380×137×0.000001+11.

### Comparative Example 3

The arrangement manner of cells is the same as that in Comparative Example 1.

### Embodiment 5

The arrangement manner of cells in the battery pack is the same as that in Embodiment 4.

### Embodiment 6

In this embodiment, the total volume of the battery pack 200 is 508 L, where the volume occupied by the battery pack housing and the battery management system and other power distribution modules therein is 119 L in total, and the remaining volume of the battery pack that can be actually used for accommodating the cells 100 is 389 L. The battery pack housing has a length of 2630 mm, a width of 1380 mm, and a thickness of 137 mm, the volume of the power distribution box is 11 L, and the total volume of the battery pack is 414 L=2630×1380×137×0.000001+11. The arrangement manner of cells in the battery pack is the same as that in Embodiment 4.

Specific parameters of Embodiments 1-6 and Comparative Examples 1-2 are as shown in Table 1.

**Table 1**

| **Experiment** | **Comparative example 1** | **Embodiment 1** | **Embodiment 2** | **Comparative example 2** | **Embodiment 3** | **Embodiment 4** | **Comparative example 3** | **Embodiment 5** | **Embodiment 6** |
|---|---|---|---|---|---|---|---|---|---|
| **Cell dimension: length, width, height (mm)** | 208*118*13.5 | 905*118*135 | 905*118*13.5 | 208*118*13.5 | 1280*118*13.5 | 1280*118*13.5 | 208*118*13.5 | 2000*118*13.5 | 2500*118*13.5 |
| **Number** | 352 | 88 | 92 | 500 | 90 | 93 | 752 | 94 | 94 |
| **Cell capacity (Ah)** | 47.5 | 202 | 202 | 47.5 | 286 | 286 | 47.5 | 448 | 561 |
| **Quantity of electiricy of cell (Wh)** | 152 | 646.4 | 646.4 | 152 | 915.2 | 915.2 | 152 | 1434 | 1795 |
| **Cell volume (L)** | 0.331 | 1.442 | 1.442 | 0.331 | 2.039 | 2.039 | 0.331 | 3 | 4 |
| **Cell energydensity (Wh/L)** | 459 | 448 | 448 | 459 | 449 | 449 | 459 | 450 | 451 |
| **Quantity of electiricy of battery pack (Wh)** | 53504 | 56883.2 | 59468.8 | 76000 | 82368 | 85113.6 | 114304 | 134758.4 | 168748.8 |
| **Total volume of batttery pack (L)** | 213 | 213 | 213 | 310 | 310 | 310 | 414 | 414 | 508 |
| **Batttery pack energydensity (Wh/L)** | 251 | 268 | 280 | 245 | 266 | 275 | 276 | 326 | 332 |
| **Sum of volumes of cells/volume of battery pack** | 54.76% | 59.7% | 62.41% | 53.49% | 59.25% | 61.23% | 60.23% | 72.39% | 73.66% |

The improvement in heat dissipation effect that is achieved in the battery pack 200 according to the embodiments of this application by designing the dimension parameters of cells 100 and the like will be described below with reference to Comparative Example 4 and Embodiments 7-10.

The cell in Comparative Example 4 and Embodiments 7-10 is fast-charged at a rate of 2C, and in the fast-charging process, the temperature rise of the cell is measured. Table 2 below records the selection of parameters including the length, width, thickness, volume, surface area, and energy of the cell in each embodiment and comparative example, and also records specific temperature rises.

**Table 2**

| | **Comparative Example 4** | **Embodiment 7** | **Embodiment 8** | **Embodiment 9** | **Embodiment 10** | **Embodiment 10** |
|---|---|---|---|---|---|---|
| **Cell body length (mm)** | 173 | 905 | 1280 | 700 | 600 | 1500 |
| **Cell body width (mm)** | 113.9 | 113.9 | 109 | 109 | 150 | 105 |
| **Cell body thickness (mm)** | 50 | 9.6 | 7 | 12.5 | 14.5 | 13.5 |
| **Cell body volume (mm)** | 985235 | 989563.2 | 976640 | 953750 | 1305000 | 2126250 |
| **Cell body surface area (mm)** | 58146.02 | 223535 | 296960 | 170100 | 197400 | 355500 |
| **Cell body length/cell body width** | 1.52 | 7.95 | 11.74 | 6.422018349 | 4 | 14.28571429 |
| **Cell body length/cell body thickness** | 3.46 | 94.2708333 | 182.8571429 | 56 | 41.37931034 | 111.1111111 |
| **Cell body length/cell body volume (mm-2)** | 0.000176 | 0.00091455 | 0.001310616 | 0.000733945 | 0.00045977 | 0.000705467 |
| **Cell body width/cell body volume (mm-2)** | 0.000116 | 0.0001151 | 0.000111607 | 0.000114286 | 0.000114943 | 0.000049383 |
| **Cell body thickness/cell body volume (mm-2)** | 0.000051 | 0.0000097 | 0.000007167 | 0.000013106 | 0.000011111 | 0.000006349 |
| **Cell body length/cell body surface area (mm-1)** | 0.002975 | 0.00404858 | 0.004310345 | 0.004115226 | 0.003039514 | 0.004219409 |
| **Cell body surface area/cell body volume (mm-1)** | 0.059017 | 0.2258926 | 0.30406291 | 0.178348624 | 0.151264368 | 0.167195767 |
| **Cell temperature rise (°C)** | 22.24 | 16.20 | 15.56 | 17.92 | 21.92 | 21.7 |
| **Battery pack temperature rise (°C)** | 12.24 | 6.5 | 5.56 | 7.92 | 11.95 | 11.7 |

It can be seen from the data in the table that under same fast-charging conditions, the temperature rise of the cell 100 provided by this application is less than those of the comparative examples to different degrees, indicating a better heat dissipation effect that the prior art; and then such cells 100 are assembled into a battery pack, the temperature rise of the battery pack is also less than that in the prior art.

It can be known by those skilled in the art by comparing the foregoing comparative examples and embodiments that for the battery pack 200 according to the embodiments of this application, by designing the arrangement, dimension parameters and other factors of the cells 100, the space utilization can overcome the limitations of existing battery packs 200, thereby achieving a higher energy density. Such an increase in energy density will be magnified as the overall volume of the battery pack 200. For battery packs 200 with a larger volume, the improvement in energy density achieved by using the solutions of the embodiments of this application will be more significant.

In description of the specification, description of reference terms such as "one embodiment", "some embodiments", "exemplary embodiment", "example", "specific example" or "some examples" means including specific features, structures, materials, or features described in the embodiment or example in at least one embodiment or example of this application. In the specification, schematic descriptions of the foregoing terms do not necessarily refer to a same embodiment or example. In addition, the described specific features, structures, materials, or characteristics may be combined in an appropriate manner in any one or more embodiments or examples.

Although the embodiments of this application have been shown and described, a person skilled in the art should understand that various changes, modifications, replacements and variations may be made to the embodiments without departing from the principles of this application, and the scope of this application is as defined by the appended claims.

## Claims

1. A battery pack (200), comprising a cell array (3) and a support member (4),
wherein the cell array (3) comprises a plurality of cells (100), at least one of the cells (100) comprises a cell body and electrode terminals (101, 102) extending out of the cell body and configured to output a current, the cell body is substantially a cuboid with a length L, a thickness D, and a height H, a thickness direction of the cell body defines an X direction, a length direction of the cell body defines a Y direction, and a height direction of the cell body defines a Z direction,
the at least one of the cells (100) comprises a casing and a core located inside the casing, a supporting region is formed on the casing, and the supporting region is supported on the support member (4) so that the cell (100) is connected to the support member (4),
**characterized in that** $600 mm ⩽ L ⩽ 2500 mm ,$ and
the at least one of cells (100) has a volume V1 and a surface area S1, at least one of cells (100) meets 0.0005 mm⁻²≤L/V1≤0.002 mm⁻²; and a relationship between a surface area S of the cell body and a volume V of the cell body is 0.1 mm⁻¹≤S/V≤0.35 mm⁻¹, a relationship between the height H of the cell body and the volume V of the cell body is 0.0001 mm⁻²≤H/V≤0.00015 mm⁻², and/or
the height H of the cell body is greater than or equal to the thickness D of the cell body, the at least one of cells (100) meets 23≤L/D≤208 and 4≤L/H≤21, and the plurality of cells (100) are generally disposed along the X direction of the at least one of cells (100) in the cell array (3); wherein the length L of the cell body meets 600mm≤L≤1500mm, and
wherein the battery pack (200) further comprises two side plate components disposed opposite to each other on two sides of the cell array (3) along the X direction and configured to sandwich the cell array (3).

2. The battery pack (200) according to claim 1, wherein each cell (100) has a first end and a second end along the Y direction, at least one of the first end and the second end has an electrode terminal (101, 102) configured to output a current, and the electrode terminals (101, 102) of the cells (100) are electrically connected to each other through connecting members.

3. The battery pack (200) according to claim 2, wherein the battery pack (200) comprises a tray for a vehicle (1), the tray comprises a first side beam (201) and a second side beam (202) disposed opposite to each other along the Y direction, the first side beam (201) and the second side beam (202) are the support member (4), and two ends of the cell (100) are respectively supported by the first side beam (201) and the second side beam (202); wherein the battery pack (200) further comprises a sealing cover, and an accommodating cavity (300) for accommodating the cell array (3)is defined by the sealing cover and the tray.

4. The battery pack (200) according to claim 3, wherein an inner wall surface of the first side beam (201) facing toward the cell (100) has a first support plate (213) protruding therefrom, a side of the first support plate (213) facing toward the sealing cover is provided with a first supporting surface, and a side of the first support plate (213) facing away from the sealing cover is provided with a first mounting surface;
an inner wall surface of the second side beam (202) facing toward the cell (100) has a second support plate (214) protruding therefrom, a side of the second support plate (214) facing toward the sealing cover is provided with a second supporting surface, and a side of the second support plate (214) facing away from the sealing cover is provided with a second mounting surface; and
the first supporting surface and the second supporting surface are configured for supporting a cell (100), and the first mounting surface and the second mounting surface are configured for mounting a bottom plate.

5. The battery pack (200) according to claim 4, wherein the inner wall surface of the first side beam (201) facing toward the cell (100) has a first connecting surface (215), and a distance from the first connecting surface (215) to the sealing cover is less than a distance from the first supporting surface to the sealing cover; the inner wall surface of the second side beam (202) facing toward the cell (100) has a second connecting surface (216), and a distance from the second connecting surface (216) to the sealing cover is less than a distance from the second supporting surface to the sealing cover; and the two ends of the cell (100) are respectively in contact with the first connecting surface (215) and the second connecting surface (216).

6. The battery pack (200) according to claim 5, wherein the inner wall surface of the first side beam (201) facing toward the cell (100) has a step structure comprising at least two steps, and sides of two steps facing toward the sealing cover respectively form the first connecting surface (215) and the first supporting surface; and
the inner wall surface of the second side beam (202) facing toward the cell (100) has a step structure comprising at least two steps, and sides of two steps facing toward the sealing cover respectively form the second connecting surface (216) and the second supporting surface.

7. The battery pack (200) according to claim 5, wherein further comprising: a first end plate (207) and a second end plate (208), wherein the first end plate (207) is disposed between the first end of the at least one of cells (100) and the first side beam (201), and the second end plate (208) is disposed between the second end of the at least one of cells (100) and the second side beam (202); and the first end of the at least one of cells (100) is connected to the first connecting surface (215) through the first end plate (207), and the second end of the at least one of cells (100) is connected to the second connecting surface (216) through the second end plate (208);
wherein the first end plate (207) comprises a first end plate body disposed opposite to an end face of the cell (100) and a first connecting plate (232) connected to the first end plate body and protruding toward the first side beam (201), the second end plate (208) comprises a second end plate body disposed opposite to an end face of the cell (100) and a first connecting plate (232) connected to the second end plate body and protruding toward the second side beam (202), and the first connecting plate (232) is connected to the first connecting surface (215) and the second connecting surface (216); and a management accommodating cavity (300) for accommodating battery management components and power distribution components is defined between the first connecting surface (215), the second connecting surface (216), the cell (100), and the sealing cover.

8. The battery pack (200) according to any one of claims 3-7, wherein the first end of the at least one of cells (100) is provided with an explosion-proof valve (103), the first side beam (201) is provided therein with an exhaust passage (222), an exhaust vent is provided at a position on the first side beam (201) corresponding to the explosion-proof valve (103), and the exhaust vent is in communication with the exhaust passage (222); the second end of the cell (100) is provided with an explosion-proof valve (103), the second side beam (202) is provided therein with an exhaust passage (222), an exhaust vent is provided at a position on the second side beam (202) corresponding to the explosion-proof valve (103), and the exhaust vent is in communication with the exhaust passage (222); and the battery pack (200) is provided with an exhaust outlet in communication with the exhaust passages (222).

9. The battery pack (200) according to claim 3, wherein the tray further comprises a third side beam (203) and a fourth side beam (204) disposed opposite to each other along the X direction, the third side beam (203) and the fourth side beam (204) provide a pressing force to the cell array (3).

10. The battery pack (200) according to claim 9, further comprising: a first elastic apparatus (205) and/or a second elastic apparatus (206), the first elastic apparatus (205) is elastically sandwiched between the third side beam (203) and the cell (100) adjacent to the third side beam (203), and the second elastic apparatus (206) is elastically sandwiched between the fourth side beam (204) and the cell (100) adjacent to the fourth side beam (204).

11. The battery pack (200) according to claim 9, wherein further comprising: a first side plate (209) and/or a second side plate (210), wherein the first side plate (209) is disposed between the third side beam (203) and the cell (100) adjacent to the third side beam (203), the second side plate (210) is disposed between the fourth side beam (204) and the cell (100) adjacent to the fourth side beam (204);
wherein the first side plate (209) comprises a side plate body (234) disposed opposite to a side surface of the cell (100) and a second connecting plate (233) connected to the side plate body (234) and protruding toward the third side beam (203), and the second side plate (210) comprises a side plate body (234) disposed opposite to a side surface of the cell (100) and a second connecting plate (233) connected to the side plate body (234) and protruding toward the fourth side beam (204);
the third side beam (203) is provided with a third connecting surface (236) facing toward the sealing cover, the fourth side beam (204) is provided with a fourth connecting surface (235) facing toward the sealing cover; and
the first side plate (209) is connected to the third connecting surface (236) through the corresponding second connecting plate (233), and the second side plate (210) is connected to the fourth connecting surface (235) through the corresponding second connecting plate (233).

12. The battery pack (200) according to claim 9, further comprising:
a first panel (212) and a second panel (211), respectively connected to upper surfaces and lower surfaces of at least a part of the cells (100);
a first end plate (207) and a second end plate (208), respectively disposed on two end faces of at least a part of the cells (100);
and a first side plate (209) and a second side plate (210), respectively disposed on outer sides of the outermost two cells (100), wherein
the first end plate (207), the second end plate (208), the first side plate (209), and the second side plate (210) are all connected to the first panel (212) and the second panel (211);
an inner wall surface of the first side beam (201) facing toward the cell (100) has a first supporting surface and a first connecting surface (215), an inner wall surface of the second side beam (202) facing toward the cell (100) has a second supporting surface and a second connecting surface (216), the first end of the cell (100) is supported by the first supporting surface, the second end of the cell (100) is supported by the second supporting surface, the first end plate (207) is connected to the first connecting surface (215), and the second end plate (208) is connected to the second connecting surface (216);
an inner wall surface of the third side beam (203) facing toward the cell (100) has a third connecting surface (236), an inner wall surface of the fourth side beam (204) facing toward the cell (100) has a fourth connecting surface; and the first side plate (209) is connected to the third connecting surface (236), the second side plate (210) is connected to the fourth connecting surface.

13. The battery pack (200) according to claim 1 or 2, wherein the support member (4) is a plurality of bottom beams, and the bottom beams are located below the cell array (3).

14. The battery pack (200) according to claim 13, wherein the bottom beams comprise a first beam (501) and a second beam (502) located on and intersecting the first beam (501), an angle between an extension direction of the first beam (501) and the Y direction is 60-90°, and the cells (100) are supported by the first beam (501), wherein preferably:
there are two second beams (502), the two second beams (502) are respectively located at two ends of the first beam (501) and are respectively perpendicular to the first beam (501), and the cells (100) are supported by the first beam (501);
wherein a center of the cell (100) is located on the first beam (501).

15. The battery pack (200) according to claim 13, wherein the bottom beams are a plurality of rectangular beams parallel to and spaced apart from each other, an angle between an extension direction of the rectangular beam and the Y direction is 60-90°, and the cell (100) is supported by the rectangular beam.

16. The battery pack (200) according to claim 13, wherein the support member (4) is a vehicle chassis, and the cell array (3) is located on the vehicle chassis.

17. The battery pack (200) according to any one of claims 1-7, 9-12, or 14-15, wherein a cell (100) placement region is formed in the battery pack (200), the cell array (3)is located in the cell placement region, the battery pack (200) comprises one cell array (3), and the cells (100) extend from one side of the cell placement region to the other side of the cell placement region along the Y direction.

18. The battery pack (200) according to any one of claims 1-7, 9-12, or 14-15, wherein a cell placement region is formed in the battery pack (200), the cell array (3) is located in the cell placement region, N cell arrays (3) along the X direction are disposed in the cell placement region, the cell arrays (3) are electrically connected to each other through connecting members between electrode terminals (101, 102) of cells (100), and N is greater than or equal to 1;
wherein an electrode terminal (101, 102) of the last cell (100) of the (N-1)^{th} cell array (3) is connected to an electrode terminal (101, 102) of the first cell (100) of the N^{th} cell array (3) through a connecting member.

19. The battery pack (200) according to any one of claims 1-7, 9-12, or 14-15, wherein a cell placement region is formed in the battery pack (200), the cell array (3) is located in the cell placement region, the battery pack (200) comprises M cell arrays (3) along the Y direction, the cell arrays (3) are electrically connected to each other through connecting members between electrode terminals (101, 102) of cells (100), and M is greater than or equal to 1;
wherein an electrode terminal (101, 102) of the last cell (100) of the (M-1)^{th} cell array (3) is connected to an electrode terminal (101, 102) of the first cell (100) of the M^{th} cell array (3) through a connecting member.

20. The battery pack (200) according to any one of claims 2-7, 9-12, or 14-15, wherein a cell placement region is formed in the battery pack (200), the cell array (3) is located in the cell placement region, the battery pack (200) comprises N cell arrays (3) along the X direction and M cell arrays (3) along the Y direction, the cell arrays (3) are electrically connected to each other through connecting members between electrode terminals (101, 102) of cells (100), N is greater than or equal to 1, and M is greater than or equal to 1.

21. The battery pack (200) according to any one of claims 1-7, 9-12, or 14-15, wherein a cell placement region is formed in the battery pack (200), the cell array (3) is located in the cell placement region, the battery pack (200) comprises J cell arrays (3) along the Z direction the cell arrays (3) are electrically connected to each other through connecting members between electrode terminals (101, 102) of cells (100), and J is greater than or equal to 1.

22. The battery pack (200) according to claim 1, wherein at least a part of the cells (100) in the cell array (3) are adhered by gluing.

23. The battery pack (200) according to claim 1, wherein further comprising: a heat exchange plate (219), wherein the heat exchange plate (219) is mounted on an upper surface of the cell array (3).

24. A vehicle (1), comprising the battery pack (200) according to any one of claims 1-23, wherein preferably:
the battery pack (200) is disposed at a bottom of the vehicle (1), and the support member (4) is fixedly connected to a chassis of the vehicle (1); and
wherein the vehicle (1) comprises a battery pack (200) disposed at a bottom of the vehicle (1), the Q direction, or the length direction of the minimum enclosing rectangle of the cell (100), or the Y direction is generally arranged along a width direction of a vehicle body of the vehicle (1), and the P direction, or the width direction of the minimum enclosing rectangle of the cell (100), or the X direction is generally arranged along a length direction of the vehicle body of the vehicle (1).

25. The vehicle (1) according to claim 24, wherein a dimension L' of the cell (100) in the Y direction and a vehicle body width W meet: 46%≤L'/W≤76%.

## Patentansprüche

1. Batteriepack (200), umfassend eine Zellenanordnung (3) und ein Stützelement (4),
wobei die Zellenanordnung (3) eine Vielzahl von Zellen (100) umfasst, wobei mindestens eine der Zellen (100) einen Zellkörper und Elektrodenanschlüsse (101, 102) umfasst, die sich aus dem Zellkörper heraus erstrecken und dazu konfiguriert sind, einen Strom abzugeben, wobei der Zellkörper im Wesentlichen ein Quader mit einer Länge L, einer Dicke D und einer Höhe H, wobei eine Dickenrichtung des Zellkörpers eine X-Richtung definiert, eine Längsrichtung des Zellkörpers eine Y-Richtung definiert und eine Höhenrichtung des Zellkörpers eine Z-Richtung definiert,
die mindestens eine der Zellen (100) ein Gehäuse und einen im Inneren des Gehäuses angeordneten Kern umfasst, an dem Gehäuse ein Auflagebereich ausgebildet ist und der Auflagebereich auf dem Stützelement (4) aufliegt, sodass die Zelle (100) mit dem Stützelement (4) verbunden ist,
**dadurch gekennzeichnet, dass** $600 mm \leq L ⩽ 2500 mm gilt$und
die mindestens eine der Zellen (100) ein Volumen V1 und eine Oberfläche S1 aufweist, wobei mindestens eine der Zellen (100) die Bedingung 0,0005 mm^{-2 ≤}L/V1 ≤ 0,002 mm⁻² erfüllt; und das Verhältnis zwischen der Oberfläche S des Zellkörpers und dem Volumen V des Zellkörpers beträgt 0,1 mm⁻¹ ≤S/V≤0,35 mm⁻¹, das Verhältnis zwischen der Höhe H des Zellkörpers und dem Volumen V des Zellkörpers beträgt 0,0001 mm⁻²≤H/V≤0,00015 mm⁻² gilt, und/oder
die Höhe H des Zellkörpers größer oder gleich der Dicke D des Zellkörpers ist, die mindestens eine der Zellen (100) die Bedingungen 23 ≤ L/D ≤ 208 und 4 ≤ L/H ≤ 21 erfüllt und die Vielzahl von Zellen (100) im Allgemeinen entlang der X-Richtung der mindestens einen der Zellen (100) in dem Zellen-Array (3) angeordnet sind; wobei die Länge L des Zellkörpers die Bedingungen 600 mm ≤ L ≤ 1500 mm erfüllt, und
wobei der Batteriesatz (200) ferner zwei Seitenplattenkomponenten umfasst, die entlang der X-Richtung an zwei Seiten der Zellenanordnung (3) einander gegenüberliegend angeordnet und dazu konfiguriert sind, dass sie die Zellenanordnung (3) einklemmen.

2. Batteriepack (200) gemäß Anspruch 1, wobei jede Zelle (100) ein erstes Ende und ein zweites Ende entlang der Y-Richtung aufweist, wobei zumindest eines der ersten und zweiten Enden einen Elektrodenanschluss (101, 102) dazu konfiguriert ist, einen Strom abzugeben, und die Elektrodenanschlüsse (101, 102) der Zellen (100) über Verbindungselemente elektrisch miteinander verbunden sind.

3. Der Batteriepack (200) gemäß Anspruch 2, wobei der Batteriepack (200) eine Wanne für ein Fahrzeug (1) umfasst, die Wanne einen ersten Seitenträger (201) und einen zweiten Seitenträger (202) umfasst, die entlang der Y-Richtung einander gegenüberliegend angeordnet sind, der erste Seitenträger (201) und der zweite Seitenträger (202) das Stützelement (4) bilden, und die beiden Enden der Zelle (100) jeweils von dem ersten Seitenträger (201) und dem zweiten Seitenträger (202) abgestützt werden; wobei der Batteriesatz (200) ferner eine Verschlussabdeckung umfasst und ein Aufnahmeraum (300) zur Aufnahme der Zellenanordnung (3) durch die Verschlussabdeckung und den Träger definiert ist.

4. Batteriepack (200) gemäß Anspruch 3, wobei eine Innenwandfläche des ersten Seitenträgers (201), die der Zelle (100) zugewandt ist, eine erste Stützplatte (213) aufweist, die von dieser vorsteht, wobei eine der Dichtungsabdeckung zugewandte Seite der ersten Stützplatte (213) mit einer ersten Auflagefläche versehen ist und eine von der Dichtungsabdeckung abgewandte Seite der ersten Stützplatte (213) mit einer ersten Befestigungsfläche versehen ist;
eine der Zelle (100) zugewandte Innenwandfläche des zweiten Seitenträgers (202) weist eine zweite Stützplatte (214) auf, die von dieser vorsteht, wobei eine der Dichtungsabdeckung zugewandte Seite der zweiten Stützplatte (214) mit einer zweiten Stützfläche versehen ist und eine von der Dichtungsabdeckung abgewandte Seite der zweiten Stützplatte (214) mit einer zweiten Befestigungsfläche versehen ist; und
die erste Auflagefläche und die zweite Auflagefläche sind dazu konfiguriert, eine Zelle (100) aufzulegen, und die erste Befestigungsfläche und die zweite Befestigungsfläche sind dazu konfiguriert, eine Bodenplatte zu befestigen.

5. Batteriepack (200) gemäß Anspruch 4, wobei die der Zelle (100) zugewandte Innenwandfläche des ersten Seitenträgers (201) eine erste Verbindungsfläche (215) aufweist und ein Abstand von der ersten Verbindungsfläche (215) zur Dichtungsabdeckung kleiner ist als ein Abstand von der ersten Auflagefläche zur Dichtungsabdeckung; die der Zelle (100) zugewandte Innenwandfläche des zweiten Seitenträgers (202) eine zweite Verbindungsfläche (216) aufweist und der Abstand von der zweiten Verbindungsfläche (216) zur Dichtungsabdeckung kleiner ist als der Abstand von der zweiten Auflagefläche zur Dichtungsabdeckung; und die beiden Enden der Zelle (100) stehen jeweils in Kontakt mit der ersten Verbindungsfläche (215) und der zweiten Verbindungsfläche (216).

6. Batteriepack (200) gemäß Anspruch 5, wobei die der Zelle (100) zugewandte Innenwandfläche des ersten Seitenträgers (201) eine Stufenstruktur aufweist, die mindestens zwei Stufen umfasst, und die der Dichtungsabdeckung zugewandten Seiten der beiden Stufen jeweils die erste Verbindungsfläche (215) und die erste Auflagefläche bilden; und
die der Zelle (100) zugewandte Innenwandfläche des zweiten Seitenträgers (202) weist eine Stufenstruktur auf, die mindestens zwei Stufen umfasst, und die der Dichtungsabdeckung zugewandten Seiten der beiden Stufen bilden jeweils die zweite Verbindungsfläche (216) und die zweite Auflagefläche.

7. Batteriepack (200) gemäß Anspruch 5, wobei es ferner umfasst: eine erste Endplatten e (207) und eine zweite Endplatte (208), wobei die erste Endplatte (207) zwischen dem ersten Ende der mindestens einen Zelle (100) und dem ersten Seitenträger (201) angeordnet ist, und die zweite Endplatte (208) zwischen dem zweiten Ende der mindestens einen Zelle (100) und dem zweiten Seitenträger (202) angeordnet ist; und das erste Ende der mindestens einen Zelle (100) über die erste Endplatte (207) mit der ersten Verbindungsfläche (215) verbunden ist und das zweite Ende der mindestens einen Zelle (100) über die zweite Endplatte (208) mit der zweiten Verbindungsfläche (216) verbunden ist;
wobei die erste Endplatte (207) einen ersten Endplattenkörper, der einer Stirnfläche der Zelle (100) gegenüberliegend angeordnet ist, und eine erste Verbindungsplatte (232) umfasst, die mit dem ersten Endplattenkörper verbunden ist und in Richtung des ersten Seitenträgers (201) vorsteht, wobei die zweite Endplatte (208) einen zweiten Endplattenkörper, der einer Endfläche der Zelle (100) gegenüberliegend angeordnet ist, und eine erste Verbindungsplatte (232) umfasst, die mit dem zweiten Endplattenkörper verbunden ist und in Richtung des zweiten Seitenträgers (202) vorsteht, und die erste Verbindungsplatte (232) mit der ersten Verbindungsfläche (215) und der zweiten Verbindungsfläche (216) verbunden ist; und zwischen der ersten Verbindungsfläche (215), der zweiten Verbindungsfläche (216), der Zelle (100) und der Verschlussabdeckung ist ein Aufnahmeraum (300) für Batteriemanagementkomponenten und Stromverteilungskomponenten definiert.

8. Batteriepack (200) gemäß Anspruch 3 bis 7, wobei das erste Ende der mindestens einen Zelle (100) mit einem explosionsgeschützten Ventil (103) versehen ist, der erste Seitenträger (201) in dem ihm eigenen Inneren mit einem Abgaskanal (222) versehen ist, an einer dem Explosionsschutzventil (103) entsprechenden Stelle am ersten Seitenträger (201) eine Abgasöffnung vorgesehen ist und die Abgasöffnung mit dem Abgaskanal (222) in Verbindung steht; das zweite Ende der Zelle (100) mit einem explosionsgeschützten Ventil (103) versehen ist, der zweite Seitenträger (202) darin mit einem Abgaskanal (222) versehen ist, an einer dem explosionsgeschützten Ventil (103) entsprechenden Stelle auf dem zweiten Seitenträger (202) eine Abgasöffnung vorgesehen ist, und die Entlüftungsöffnung steht mit dem Abgaskanal (222) in Verbindung; und der Batteriesatz (200) ist mit einem Abgasauslass versehen, der mit den Abgaskanälen (222) in Verbindung steht.

9. Batteriepack (200) gemäß Anspruch 3, wobei die Schale ferner einen dritten Seitenträger (203) und einen vierten Seitenträger (204) umfasst, die entlang der X-Richtung einander gegenüberliegend angeordnet sind, wobei der dritte Seitenträger (203) und der vierte Seitenträger (204) eine Anpresskraft auf die Zellenanordnung (3) ausüben.

10. Batteriepack (200) gemäß Anspruch 9, das ferner umfasst: eine erste elastische Vorrichtung (205) und/oder eine zweite elastische Vorrichtung (206), wobei die erste elastische Vorrichtung (205) elastisch zwischen dem dritten Seitenträger (203) und der an den dritten Seitenträger (203) angrenzenden Zelle (100) eingeklemmt ist, und die zweite elastische Vorrichtung (206) ist elastisch zwischen dem vierten Seitenträger (204) und der an den vierten Seitenträger (204) angrenzenden Zelle (100) angeordnet.

11. Batteriepack (200) gemäß Anspruch 9, wobei es ferner umfasst: eine erste Seitenplatte (209) und/oder eine zweite Seitenplatte (210), wobei die erste Seitenplatte (209) zwischen dem dritten Seitenträger (203) und der Zelle (100) angrenzend an den dritten Seitenträger (203) angeordnet ist, die zweite Seitenplatte (210) zwischen dem vierten Seitenträger (204) und der Zelle (100) angrenzend an den vierten Seitenträger (204) angeordnet ist;
wobei die erste Seitenplatte (209) einen Seitenplattenkörper (234), der einer Seitenfläche der Zelle (100) gegenüberliegend angeordnet ist, und eine zweite Verbindungsplatte (233) umfasst, die mit dem Seitenplattenkörper (234) verbunden ist und in Richtung des dritten Seitenträgers (203) vorsteht, und die zweite Seitenplatte (210) einen Seitenplattenkörper (234), der einer Seitenfläche der Zelle (100) gegenüberliegend angeordnet ist, sowie eine zweite Verbindungsplatte (233) umfasst, die mit dem Seitenplattenkörper (234) verbunden ist und in Richtung des vierten Seitenbalkens (204) ragt;
der dritte Seitenträger (203) ist mit einer dritten Verbindungsfläche (236) versehen, die der Dichtungsabdeckung zugewandt ist, der vierte Seitenträger (204) ist mit einer vierten Verbindungsfläche (235) versehen, die der Dichtungsabdeckung zugewandt ist; und
die erste Seitenplatte (209) ist über die entsprechende zweite Verbindungsplatte (233) mit der dritten Verbindungsfläche (236) verbunden, und die zweite Seitenplatte (210) ist über die entsprechende zweite Verbindungsplatte (233) mit der vierten Verbindungsfläche (235) verbunden.

12. Der Batteriepack (200) gemäß Anspruch 9, ferner umfassend:
eine erste Platte (212) und eine zweite Platte (211), die jeweils mit den Oberseiten und Unterseiten zumindest eines Teils der Zellen (100) verbunden sind;
eine erste Endplatte (207) und eine zweite Endplatte (208), die jeweils an zwei Stirnseiten zumindest eines Teils der Zellen (100) angeordnet sind;
sowie eine erste Seitenplatte (209) und eine zweite Seitenplatte (210), die jeweils an den Außenseiten der beiden äußersten Zellen (100) angeordnet sind, wobei
die erste Endplatte (207), die zweite Endplatte (208), die erste Seitenplatte (209) und die zweite Seitenplatte (210) alle mit der ersten Platte (212) und der zweiten Platte (211) verbunden sind;
eine der Zelle (100) zugewandte Innenwandfläche des ersten Seitenträgers (201) weist eine erste Auflagefläche und eine erste Verbindungsfläche (215) auf, eine der Zelle (100) zugewandte Innenwandfläche des zweiten Seitenträgers (202) weist eine zweite Auflagefläche und eine zweite Verbindungsfläche (216) auf, das erste Ende der Zelle (100) von der ersten Auflagefläche abgestützt wird, das zweite Ende der Zelle (100) von der zweiten Auflagefläche abgestützt wird, die erste Endplatte (207) mit der ersten Verbindungsfläche (215) verbunden ist und die zweite Endplatte (208) mit der zweiten Verbindungsfläche (216) verbunden ist;
eine der Zelle (100) zugewandte Innenwandfläche des dritten Seitenträgers (203) weist eine dritte, " " bezeichnete Verbindungsfläche (236) auf, eine der Zelle (100) zugewandte Innenwandfläche des vierten Seitenträgers (204) weist eine vierte Verbindungsfläche auf; und die erste Seitenplatte (209) ist mit der dritten Verbindungsfläche (236) verbunden, die zweite Seitenplatte (210) mit der vierten Verbindungsfläche verbunden ist.

13. Batteriepack (200) gemäß Anspruch 1 oder 2, wobei das Stützelement (4) aus mehreren Bodenträgern besteht und die Bodenträger unterhalb der Zellenanordnung (3) angeordnet sind.

14. Batteriepack (200) gemäß Anspruch 13, wobei die Bodenträger einen ersten Träger (501) und einen zweiten Träger (502) umfassen, der auf dem ersten Träger (501) angeordnet ist und diesen schneidet, wobei der Winkel zwischen einer Ausdehnungsrichtung des ersten Trägers (501) und der Y-Richtung 60-90° beträgt, und die Zellen (100) von dem ersten Träger (501) getragen werden, wobei vorzugsweise:
zwei zweite Träger (502) vorhanden sind, die beiden zweiten Träger (502) jeweils an zwei Enden des ersten Trägers (501) angeordnet sind und jeweils senkrecht zum ersten Träger (501) stehen, und die Zellen (100) vom ersten Träger (501) getragen werden;
wobei sich ein Mittelpunkt der Zelle (100) auf dem ersten Träger (501) befindet.

15. Der Batteriepack (200) gemäß Anspruch 13, wobei die unteren Träger eine Vielzahl von rechteckigen Trägern sind, die parallel zueinander und voneinander beabstandet sind, wobei ein Winkel zwischen einer Ausdehnungsrichtung des rechteckigen Trägers und der Y-Richtung 60-90° beträgt und die Zelle (100) von dem rechteckigen Träger getragen wird.

16. Batteriepack (200) gemäß Anspruch 13, wobei das Stützelement (4) ein Fahrzeugchassis ist und sich die Zellenanordnung (3) auf dem Fahrzeugchassis befindet.

17. Batteriepack (200) gemäß einem der Ansprüche 1-7, 9-12 oder 14-15, wobei in dem Batteriepack (200) ein Zellplatzierungsbereich (100) ausgebildet ist, sich die Zellenanordnung (3) in dem Zellplatzierungsbereich befindet, das Batteriepack (200) eine Zellenanordnung (3) umfasst, und sich die Zellen (100) entlang der Y-Richtung von einer Seite des Zellunterbringungsbereichs zur anderen Seite des Zellunterbringungsbereichs erstrecken.

18. Batteriepack (200) gemäß Anspruch 1-7, 9-12 oder 14-15, wobei in dem Batteriepack (200) ein Zellplatzierungsbereich ausgebildet ist, sich die Zellenanordnung (3) in dem Zellenplatzierungsbereich befindet, N Zellenanordnungen (3) entlang der X-Richtung in dem Zellenplatzierungsbereich angeordnet sind, die Zellenanordnungen (3) über Verbindungselemente zwischen den Elektrodenanschlüssen (101, 102) der Zellen (100) elektrisch miteinander verbunden sind und N größer oder gleich 1 ist;
wobei ein Elektrodenanschluss (101, 102) der letzten Zelle (100) der (N-1)-ten Zellenanordnung (3) über ein Verbindungselement mit einem Elektrodenanschluss (101, 102) der ersten Zelle (100) der N-ten Zellenanordnung (3) verbunden ist.

19. Batteriepack (200) gemäß Anspruch 1-7, 9-12 oder 14-15, wobei in dem Batteriepack (200) ein Zellenplatzierungsbereich ausgebildet ist, sich die Zellenanordnung (3) in dem Zellenplatzierungsbereich befindet, der Akku (200) M Zellenanordnungen (3) entlang der Y-Richtung umfasst, die Zellenanordnungen (3) über Verbindungselemente zwischen den Elektrodenanschlüssen (101, 102) der Zellen (100) elektrisch miteinander verbunden sind und M größer oder gleich 1 ist;
wobei ein Elektrodenanschluss (101, 102) der letzten Zelle (100) der (M-1)-ten Zellenanordnung (3) über ein Verbindungselement mit einem Elektrodenanschluss (101, 102) der ersten Zelle (100) der M-ten Zellenanordnung (3) verbunden ist.

20. Batteriepack (200) gemäß einem der Ansprüche 2-7, 9-12 oder 14-15, wobei in dem Batteriesatz (200) ein Zellenplatzierungsbereich ausgebildet ist, sich die Zellenanordnung (3) in dem Zellenplatzierungsbereich befindet und der Batteriesatz (200) N Zellenanordnungen (3) entlang der X-Richtung und M Zellenanordnungen (3) entlang der Y-Richtung umfasst, die Zellenanordnungen (3) über Verbindungselemente zwischen den Elektrodenanschlüssen (101, 102) der Zellen (100) elektrisch miteinander verbunden sind, N größer oder gleich 1 ist und M größer oder gleich 1 ist.

21. Batteriepack (200) gemäß Anspruch 1-7, 9-12 oder 14-15, wobei in dem Batteriepack (200) ein Zellplatzierungsbereich ausgebildet ist, sich die Zellenanordnung (3) in dem Zellenplatzierungsbereich befindet, der Akku (200) J Zellenanordnungen (3) entlang der Z-Richtung umfasst, die Zellenanordnungen (3) über Verbindungselemente zwischen den Elektrodenanschlüssen (101, 102) der Zellen (100) elektrisch miteinander verbunden sind und J größer oder gleich 1 ist.

22. Batteriepack (200) gemäß Anspruch 1, wobei zumindest ein Teil der Zellen (100) in der Zellenanordnung (3) durch Kleben befestigt ist.

23. Batteriepack (200) gemäß Anspruch 1, wobei es ferner umfasst: eine Wärmeaustauschplatte (219), wobei die Wärmeaustauschplatte (219) an einer Oberseite der Zellenanordnung (3) angebracht ist.

24. Fahrzeug (1), das den Batteriepack (200) gemäß einem der Ansprüche 1 bis 23 umfasst, wobei vorzugsweise:
der Akku (200) ist am Boden des Fahrzeugs (1) angeordnet, und das Stützelement (4) ist fest mit einem Fahrgestell des Fahrzeugs (1) verbunden; und
wobei das Fahrzeug (1) einen am Boden des Fahrzeugs (1) angeordneten Batteriepack (200) umfasst, w die Q-Richtung oder die Längsrichtung des kleinsten umschließenden Rechtecks der Zelle (100) oder die Y-Richtung im Wesentlichen entlang einer Breitenrichtung einer Fahrzeugkarosserie des Fahrzeugs (1) verläuft und die P-Richtung oder die Breitenrichtung des kleinsten umschließenden Rechtecks der Zelle (100) oder die X-Richtung im Wesentlichen entlang einer Längsrichtung der Fahrzeugkarosserie des Fahrzeugs (1) verläuft.

25. Fahrzeug (1) gemäß Anspruch 24, wobei eine Abmessung L' der Zelle (100) in Y-Richtung und eine Karosseriebreite W folgende Bedingung erfüllen: 46 % ≤ L'/W ≤ 76 %.

## Revendications

1. Bloc de batterie (200), comprenant un réseau de cellules (3) et un élément de support (4),
dans lequel le réseau de cellules (3) comprend une pluralité de cellules (100), au moins l'une des cellules (100) comprend un corps de cellule et des bornes d'électrode (101, 102) s'étendant hors du corps de cellule et configurées pour délivrer un courant, le corps de cellule est sensiblement un parallélépipède rectangle de longueur L, une épaisseur D et une hauteur H, la direction de l'épaisseur du corps de cellule définissant une direction X, la direction de la longueur du corps de cellule définissant une direction Y, et la direction de la hauteur du corps de cellule définissant une direction Z,
ladite au moins une cellule (100) comprend un boîtier et un noyau situé à l'intérieur du boîtier, une zone d'appui est formée sur le boîtier, et ladite zone d'appui s'appuie sur l'élément de support (4) de sorte que la cellule (100) soit reliée à l'élément de support (4),
**caractérisée en ce que** $600 mm \leq L ⩽ 2 500 mm ,$et
ladite au moins une cellule (100) présente un volume V₁ et une surface S₁, ladite au moins une cellule (100) satisfait à la relation 0,0005 mm⁻² ≤ L/V1 ≤ 0,002 mm⁻²; et la relation entre la surface S du corps de la cellule et le volume V du corps de la cellule est 0,1 mm⁻¹¹ ≤ S/V ≤ 0,35 mm⁻¹ , la relation entre la hauteur H du corps de la cellule et le volume V du corps de la cellule est 0,0001 mm⁻² ≤ H/V ≤ 0,00015 mm⁻², et/ou
la hauteur H du corps de cellule est supérieure ou égale à l'épaisseur D du corps de cellule, ladite au moins une cellule (100) satisfait aux relations 23 ≤ L/D ≤ 208 et 4 ≤ L/H ≤ 21, et la pluralité de cellules (100) est généralement disposée le long de la direction X de ladite au moins une cellule (100) dans le réseau de cellules (3) ; dans lequel la longueur L du corps de cellule satisfait aux conditions 600 mm ≤ L ≤ 1 500 mm, et
dans lequel le bloc de batterie (200) comprend en outre deux éléments de plaque latérale disposés en vis-à-vis l'un de l'autre sur les deux côtés du réseau de cellules (3) le long de la direction X et configurés pour prendre en sandwich le réseau de cellules (3).

2. Bloc de batterie (200) selon la revendication 1, dans lequel chaque cellule (100) présente une première extrémité et une seconde extrémité le long de la direction Y, au moins l'une parmi la première extrémité et la seconde extrémité comporte une borne d'électrode (101, 102) configurée pour délivrer un courant, et les bornes d'électrode (101, 102) des cellules (100) sont reliées électriquement les unes aux autres par l'intermédiaire d'éléments de connexion.

3. Bloc de batterie (200) selon la revendication 2, dans lequel le bloc de batterie (200) comprend un bac destiné à un véhicule (1), le bac comprend une première poutre latérale (201) et une deuxième poutre latérale (202) disposées en vis-à-vis l'une de l'autre le long de la direction Y, la première poutre latérale (201) et la deuxième poutre latérale (202) constituent l'élément de support (4), et les deux extrémités de la cellule (100) sont respectivement supportées par la première poutre latérale (201) et la deuxième poutre latérale (202) ; dans lequel le bloc de batterie (200) comprend en outre un couvercle d'étanchéité, et une cavité de logement (300) destinée à loger le réseau de cellules (3) est définie par le couvercle d'étanchéité et le plateau.

4. Bloc de batterie (200) selon la revendication 3, dans lequel une surface de paroi interne de la première poutre latérale (201) tournée vers la cellule (100) comporte une première plaque de support (213) qui en fait saillie, un côté de la première plaque de support (213) tourné vers le couvercle d'étanchéité étant prévu d'une première surface d'appui, et un côté de la première plaque de support (213) opposé au couvercle d'étanchéité étant prévu d'une première surface de montage ;
une surface de paroi intérieure de la deuxième poutre latérale (202) tournée vers la cellule (100) comporte une deuxième plaque de support (214) qui en fait saillie, un côté de la deuxième plaque de support (214) tourné vers le couvercle d'étanchéité est prévu avec une deuxième surface de support, et un côté de la deuxième plaque de support (214) opposé au couvercle d'étanchéité est prévu avec une deuxième surface de montage ; et
la première surface d'appui et la deuxième surface d'appui sont configurées pour supporter une cellule (100), et la première surface de montage et la deuxième surface de montage sont configurées pour monter une plaque de fond.

5. Bloc de batterie (200) selon la revendication 4, dans lequel la surface de paroi interne de la première poutre latérale (201) tournée vers la cellule (100) comporte une première surface de raccordement (215), et la distance entre la première surface de raccordement (215) et le couvercle d'étanchéité est inférieure à la distance entre la première surface d'appui et le couvercle d'étanchéité ; la surface de paroi interne de la deuxième poutre latérale (202) tournée vers la cellule (100) comporte une deuxième surface de raccordement (216), et la distance entre la deuxième surface de raccordement (216) et le couvercle d'étanchéité est inférieure à la distance entre la deuxième surface d'appui et le couvercle d'étanchéité ; et les deux extrémités de la cellule (100) sont respectivement en contact avec la première surface de raccordement (215) et la deuxième surface de raccordement (216).

6. Bloc de batterie (200) selon la revendication 5, dans lequel la surface de paroi interne de la première poutre latérale (201) tournée vers la cellule (100) comprend une structure en gradins comprenant au moins deux gradins, et les côtés des deux gradins tournés vers le couvercle d'étanchéité forment respectivement la première surface de raccordement (215) et la première surface d'appui ; et
la surface intérieure de la paroi de la deuxième poutre latérale (202) tournée vers la cellule (100) comprend une structure en gradins comprenant au moins deux gradins, et les flancs des deux gradins tournés vers le couvercle d'étanchéité forment respectivement la deuxième surface de raccordement (216) et la deuxième surface d'appui.

7. Bloc de batterie (200) selon la revendication 5, dans lequel on comprend : une première plaque d'extrémité (207) et une deuxième plaque d'extrémité (208), la première plaque d'extrémité (207) étant disposée entre la première extrémité de l'au moins une cellule (100) et la première poutre latérale (201), et la deuxième plaque d'extrémité (208) est disposée entre la deuxième extrémité de ladite au moins une cellule (100) et la deuxième poutre latérale (202) ; et la première extrémité de ladite au moins une cellule (100) est reliée à la première surface de raccordement (215) par l'intermédiaire de la première plaque d'extrémité (207), et la deuxième extrémité de ladite au moins une cellule (100) est reliée à la deuxième surface de raccordement (216) par l'intermédiaire de la deuxième plaque d'extrémité (208) ;
dans lequel la première plaque d'extrémité (207) comprend un premier corps de plaque d'extrémité disposé en face d'une face d'extrémité de la cellule (100) et une première plaque de raccordement (232) reliée au premier corps de plaque d'extrémité et faisant saillie vers la première poutre latérale (201), la deuxième plaque d'extrémité (208) comprend un deuxième corps de plaque d'extrémité disposé en face d'une face d'extrémité de la cellule (100) et une première plaque de connexion (232) reliée au deuxième corps de plaque d'extrémité et faisant saillie vers la deuxième poutre latérale (202), et la première plaque de connexion (232) est reliée à la première surface de connexion (215) et à la deuxième surface de connexion (216) ; et une cavité de logement de gestion (300) destinée à loger des composants de gestion de batterie et des composants de distribution d'énergie est définie entre la première surface de raccordement (215), la deuxième surface de raccordement (216), la cellule (100) et le couvercle d'étanchéité.

8. Bloc de batterie (200) selon l'une quelconque des revendications 3 à 7, dans lequel la première extrémité de l'au moins une cellule (100) est prévue d'une soupape antidéflagrante (103), la première traverse latérale (201) est prévue, en son sein, d'un passage d'échappement (222), un orifice d'échappement est prévu à un emplacement de la première traverse latérale (201) correspondant à la soupape antidéflagrante (103), et l'orifice d'échappement communique avec le passage d'échappement (222) ; la deuxième extrémité de la cellule (100) est prévue d'une soupape antidéflagrante (103), la deuxième poutre latérale (202) comporte en son sein un passage d'échappement (222), un orifice d'échappement est prévu à un emplacement sur la deuxième poutre latérale (202) correspondant à la soupape antidéflagrante (103), et l'orifice d'évacuation est en communication avec le passage d'évacuation (222) ; et le bloc de batterie (200) prévoit une sortie d'évacuation en communication avec les passages d'évacuation (222).

9. Bloc de batterie (200) selon la revendication 3, dans lequel le plateau comprend en outre une troisième traverse latérale (203) et une quatrième traverse latérale (204) disposées en vis-à-vis l'une de l'autre le long de la direction X, la troisième traverse latérale (203) et la quatrième traverse latérale (204) exerçant une force de pression sur le réseau de cellules (3).

10. Bloc de batterie (200) selon la revendication 9, comprenant en outre : un premier dispositif élastique (205) et/ou un deuxième dispositif élastique (206), le premier dispositif élastique (205) étant pris en sandwich de manière élastique entre la troisième poutre latérale (203) et la cellule (100) adjacente à la troisième poutre latérale (203), et le deuxième dispositif élastique (206) est pris en sandwich de manière élastique entre la quatrième poutre latérale (204) et la cellule (100) adjacente à la quatrième poutre latérale (204).

11. Bloc de batterie (200) selon la revendication 9, dans lequel il comprend en outre : une première plaque latérale (209) et/ou une deuxième plaque latérale (210), la première plaque latérale (209) étant disposée entre la troisième traverse latérale (203) et la cellule (100) adjacente à la troisième traverse latérale (203), la deuxième plaque latérale (210) est disposée entre la quatrième traverse latérale (204) et la cellule (100) adjacente à la quatrième traverse latérale (204) ;
dans lequel la première plaque latérale (209) comprend un corps de plaque latérale (234) disposé en face d'une surface latérale de la cellule (100) et une deuxième plaque de raccordement (233) reliée au corps de plaque latérale (234) et faisant saillie vers la troisième poutre latérale (203), et la deuxième plaque latérale (210) comprend un corps de plaque latérale (234) disposé en face d'une surface latérale de la cellule (100) et une deuxième plaque de raccordement (233) reliée au corps de plaque latérale (234) et faisant saillie vers la quatrième poutre latérale (204) ;
la troisième traverse latérale (203) est prévue d'une troisième surface de raccordement (236) tournée vers le couvercle d'étanchéité, la quatrième traverse latérale (204) est prévue d'une quatrième surface de raccordement (235) tournée vers le couvercle d'étanchéité ; et
la première plaque latérale (209) est reliée à la troisième surface de raccordement (236) par l'intermédiaire de la deuxième plaque de raccordement correspondante (233), et la deuxième plaque latérale (210) est reliée à la quatrième surface de raccordement (235) par l'intermédiaire de la deuxième plaque de raccordement correspondante (233).

12. Bloc de batterie (200) selon la revendication 9, comprenant en outre :
un premier panneau (212) et un deuxième panneau (211), respectivement reliés aux surfaces supérieures et aux surfaces inférieures d'au moins une partie des cellules (100) ;
une première plaque d'extrémité (207) et une deuxième plaque d'extrémité (208), disposées respectivement sur deux faces d'extrémité d'au moins une partie des cellules (100) ;
et une première plaque latérale (209) et une deuxième plaque latérale (210), disposées respectivement sur les côtés extérieurs des deux cellules (100) les plus à l'extérieur, dans lequel
la première plaque d'extrémité (207), la deuxième plaque d'extrémité (208), la première plaque latérale (209) et la deuxième plaque latérale (210) sont toutes reliées au premier panneau (212) et au deuxième panneau (211) ;
une surface de paroi intérieure de la première poutre latérale (201) tournée vers la cellule (100) comporte une première surface d'appui et une première surface de raccordement (215), une surface de paroi intérieure de la deuxième poutre latérale (202) tournée vers la cellule (100) comporte une deuxième surface d'appui et une deuxième surface de raccordement (216), la première extrémité de la cellule (100) est supportée par la première surface d'appui, la deuxième extrémité de la cellule (100) est supportée par la deuxième surface d'appui, la première plaque d'extrémité (207) est reliée à la première surface de raccordement (215), et la deuxième plaque d'extrémité (208) est reliée à la deuxième surface de raccordement (216) ;
une surface de paroi intérieure de la troisième poutre latérale (203) tournée vers la cellule (100) comporte une troisième surface de raccordement e (236), une surface de paroi intérieure de la quatrième poutre latérale (204) tournée vers la cellule (100) comporte une quatrième surface de raccordement ; et la première plaque latérale (209) est raccordée à la troisième surface de raccordement (236), la deuxième plaque latérale (210) est reliée à la quatrième surface de raccordement.

13. Bloc de batterie (200) selon la revendication 1 ou 2, dans lequel l'élément de support (4) est constitué d'une pluralité de poutres inférieures, et lesdites poutres inférieures sont situées sous le réseau de cellules (3).

14. Bloc de batterie (200) selon la revendication 13, dans lequel les poutres inférieures comprennent une première poutre (501) et une deuxième poutre (502) située sur la première poutre (501) et la coupant, l'angle entre la direction d'extension de la première poutre (501) et la direction Y est compris entre 60 et 90°, et les cellules (100) sont supportées par la première poutre (501), dans lequel, de préférence :
il y a deux deuxièmes poutres (502), les deux deuxièmes poutres (502) sont respectivement situées aux deux extrémités de la première poutre (501) et sont respectivement perpendiculaires à la première poutre (501), et les cellules (100) sont supportées par la première poutre (501) ;
dans lequel le centre de la cellule (100) est situé sur la première poutre (501).

15. Bloc de batterie (200) selon la revendication 13, dans lequel les poutres inférieures constituent une pluralité de poutres rectangulaires parallèles les unes aux autres et espacées les unes des autres, l'angle entre une direction d'extension de la poutre rectangulaire et la direction Y est compris entre 60 et 90°, et la cellule (100) est supportée par la poutre rectangulaire.

16. Bloc de batterie (200) selon la revendication 13, dans lequel l'élément de support (4) est un châssis de véhicule, et le réseau de cellules (3) est situé sur le châssis de véhicule.

17. Bloc de batterie (200) selon l'une quelconque des revendications 1 à 7, 9 à 12 ou 14 à 15, dans lequel une zone de placement des cellules (100) est formée dans le bloc de batterie (200), le réseau de cellules (3) est situé dans la zone de placement des cellules, le bloc de batterie (200) comprend un réseau de cellules (3), et les cellules (100) s'étendent le long du côté de la zone de placement des cellules jusqu'à l'autre côté de celle-ci dans la direction Y.

18. Bloc de batterie (200) selon l'une quelconque des revendications 1 à 7, 9 à 12 ou 14 à 15, dans lequel une zone de placement de cellules est formée dans le bloc de batterie (200), le réseau de cellules (3) est situé dans la zone de placement des cellules, N réseaux de cellules (3) le long de la direction X sont disposés dans la zone de placement des cellules, les réseaux de cellules (3) sont reliés électriquement les uns aux autres par des éléments de connexion entre les bornes d'électrode (101, 102) des cellules (100), et N est supérieur ou égal à 1 ;
dans lequel une borne d'électrode (101, 102) de la dernière cellule (100) du (N-1^{)-ième} réseau de cellules (3) est reliée à une borne d'électrode (101, 102) de la première cellule (100) du N^{-ième} réseau de cellules (3) par l'intermédiaire d'un élément de connexion.

19. Bloc de batterie (200) selon l'une quelconque des revendications 1 à 7, 9 à 12 ou 14 à 15, dans lequel une zone de placement des cellules est formée dans le bloc de batterie (200), le réseau de cellules (3) est situé dans la zone de placement des cellules, le bloc de batterie (200) comprend M réseaux de cellules (3) le long de la direction Y, les réseaux de cellules (3) sont reliés électriquement les uns aux autres par l'intermédiaire d'éléments de connexion entre les bornes d'électrode (101, 102) des cellules (100), et M est supérieur ou égal à 1 ;
dans lequel une borne d'électrode (101, 102) de la dernière cellule (100) du (M-1)^{-ième} réseau de cellules (3) est reliée à une borne d'électrode (101, 102) de la première cellule (100) du M^{-ième} réseau de cellules (3) par l'intermédiaire d'un élément de connexion.

20. Bloc de batterie (200) selon l'une quelconque des revendications 2 à 7, 9 à 12 ou 14 à 15, dans lequel une zone de placement des cellules est formée dans le bloc de batterie (200), le réseau de cellules (3) est situé dans la zone de placement des cellules, le bloc de batterie (200) comprend N réseaux de cellules (3) le long de la direction X et M réseaux de cellules (3) le long de la direction Y, les réseaux de cellules (3) sont reliés électriquement les uns aux autres par l'intermédiaire d'éléments de connexion entre les bornes d'électrodes (101, 102) des cellules (100), N est supérieur ou égal à 1, et M est supérieur ou égal à 1.

21. Bloc de batterie (200) selon l'une quelconque des revendications 1 à 7, 9 à 12 ou 14 à 15, dans lequel une zone de placement des cellules est formée dans le bloc de batterie (200), le réseau de cellules (3) est situé dans la zone de placement des cellules, le bloc de batterie (200) comprend J réseaux de cellules (3) le long de la direction Z, les réseaux de cellules (3) sont reliés électriquement les uns aux autres par des éléments de connexion situés entre les bornes d'électrodes (101, 102) des cellules (100), et J est supérieur ou égal à 1.

22. Bloc de batterie (200) selon la revendication 1, dans lequel au moins une partie des cellules (100) du réseau de cellules (3) est fixée par collage.

23. Bloc de batterie (200) selon la revendication 1, dans lequel il comprend en outre : une plaque d'échange thermique (219), ladite plaque d'échange thermique (219) étant montée sur une surface supérieure du réseau de cellules (3).

24. Véhicule (1) comprenant le bloc de batterie (200) selon l'une quelconque des revendications 1 à 23, dans lequel, de préférence :
le bloc de batterie (200) est disposé au niveau du plancher du véhicule (1), et l'élément de support (4) est relié de manière fixe au châssis du véhicule (1) ; et
dans lequel le véhicule (1) comprend un bloc de batterie (200) disposé au niveau du plancher du véhicule (1), l la direction Q, ou la direction de longueur du rectangle d'enveloppement minimal de la cellule (100), ou la direction Y est globalement orientée le long d'une direction de largeur de la carrosserie du véhicule (1), et la direction P, ou la direction de largeur du rectangle d'enveloppement minimal de la cellule (100), ou la direction X est globalement orientée le long d'une direction de longueur de la carrosserie du véhicule (1).

25. Véhicule (1) selon la revendication 24, dans lequel une dimension L' de la cellule (100) dans la direction Y et une largeur W de la carrosserie du véhicule satisfont à la relation suivante : 46 % ≤ L'/W ≤ 76 %.
